# EUROPEAN PATENT APPLICATION

(11) **EP 3 779 512 A1**
(43) Date of publication of application: **17.02.2021**
(21) Application number: 19777988.7
(22) Date of filing: 27.02.2019
(51) Int. Cl.: G01S 17/87, A01B 69/00, G01S 15/87, G01S 15/93, G01S 17/93, G05D 1/02

(54) **OBSTACLE DETECTION SYSTEM AND WORK VEHICLE**

(30) Priority: 29.03.2018 JP 2018064547; 29.03.2018 JP 2018064551; 29.03.2018 JP 2018064515
(71) Applicant: Yanmar Power Technology Co., Ltd., Osaka-shi Osaka 530-0013 (JP)
(72) Inventor: IWASE, Takuya, Osaka-shi, Osaka 530-0013 (JP); YOKOYAMA, Kazuhisa, Osaka-shi, Osaka 530-0013 (JP); SUGITA, Shiro, Osaka-shi, Osaka 530-0013 (JP)
(74) Representative: Poindron, Cyrille
(86) International application number: PCT/JP2019/007682
(87) International publication number: WO 2019/187937

(57) **Abstract**

To suppress an increase in the range in which obstacle detection is not executable and prevent the false detection of a movable part as an obstacle, the present invention includes: distance sensors 101, 102 provided in a work vehicle 1 and capable of measuring the distance to a measurement target; an obstacle control unit that executes collision avoidance control upon detecting a measurement target within a predetermined distance as an obstacle based on measurement results from the distance sensors 101, 102; a masking range setting unit that sets a masking range in which the detection of obstacles is not executed and the execution of the collision avoidance control is restricted; and a range-of-movement acquisition unit that acquires the range of movement of movable parts 5, 12 provided in the work vehicle 1, wherein the masking range setting unit sets the masking range corresponding to the range of movement.

## Description

### TECHNICAL FIELD

The present invention relates to an obstacle detection system used in a work vehicle and to a work vehicle including a position information measurement sensor that measures the position information about a measurement target around the work vehicle.

### BACKGROUND ART

In the above-described obstacle detection system, a distance sensor (radar) that measures the distance to the measurement target is attached to the work vehicle, and an obstacle detection process is performed based on the measurement information of the distance sensor to detect the measurement target within a predetermined distance as an obstacle. During the obstacle detection process, when an obstacle is detected, collision avoidance control is executed, for example, an alarming buzzer is operated (see for example Patent Literature 1).

As for a work vehicle, a member such as an elevating ladder included in the work vehicle is sometimes provided around the work vehicle. Therefore, when the member included in the work vehicle, or the like, falls within the measurement range of the distance sensor, there is a possibility that the member included in the work vehicle, or the like, is improperly detected as an obstacle.

Therefore, in the system disclosed in Patent Literature 1, the range which is included in the measurement range of the distance sensor and which the member included in the work vehicle, or the like, falls within is set as a masking range in which obstacle detection is not executed and for which the execution of the collision avoidance control is restricted. This prevents a member included in the work vehicle, or the like, from being improperly detected as an obstacle.

The above-described work vehicle includes a camera as a position information measurement sensor to detect a working position such as a digging position or a soil dumping position based on the captured information of the camera, the work vehicle is moved to the working position, and then predetermined work is performed (see for example Patent Literature 2).

The working position is detected from the captured information of the camera, and therefore when the installation state, such as the installation position or the installation direction, of the camera is different from the desired state, the position or the direction at the detected working position is different from the supposed one. Therefore, in the work vehicle disclosed in Patent Literature 2 described above, the calibration is executed to set the installation state of the position information measurement sensor (camera) to the desired state. A calibration jig is attached to a work device (bucket) of the work vehicle, and the calibration jig is captured by the camera to detect the difference between the installation position and the installation direction of the camera and the desired installation position or installation direction and calibrate the installation state of the camera to the desired state. Furthermore, it discloses that, instead of attaching the calibration jig to the bucket, the bucket is captured by the camera, and the feature point of the bucket, such as the tip of the claw of the bucket or the edge of the bucket, is extracted so that the installation state of the camera may be calibrated to the desired state.

### CITATION LIST

### Patent Literature

Patent Literature 1: PCT International Publication Pamphlet No. 2016/174977
Patent Literature 2: Japanese Patent No. 3827480

### DISCLOSURE OF INVENTION

### PROBLEMS TO BE SOLVED BY THE INVENTION

The work vehicle includes not only a member such as an elevating ladder disposed at a fixed position but also a traveling part such as a steerable wheel or a movable part such as a work device. When the movable part falls within the measurement range of the distance sensor, it is also necessary to set the masking range so as not to improperly detect the movable part as an obstacle as described above.

In a case where a masking range is set for a movable part, it is difficult to determine a range that is set as the masking range as the movable part moves with respect to the work vehicle. When a large range including the movable part is set as a masking range, the range in which obstacle detection is not executable is increased. Conversely, when the masking range is small, there is a high possibility that the movable part is improperly detected as an obstacle although an increase in the range in which obstacle detection is not executable may be prevented.

In view of the above actual circumstance, the present invention has an object to provide an obstacle detection system that may prevent the improper detection of a movable part as an obstacle while suppressing an increase in the range in which obstacle detection is not executable.

In the work vehicle disclosed in Patent Literature 2 above, the calibration jig is attached to the bucket of the work vehicle so as to calibrate the position information measurement sensor; however, it is necessary to perform the operation to attach the calibration jig to the bucket and also perform the operation to remove the calibration jig from the bucket. This leads to the necessity of an inconvenient operation and a reduction in the operating efficiency.

Furthermore, when the position information measurement sensor is calibrated by using the bucket, the bucket is used exclusively for the calibration, and the bucket is a dedicated member for performing the calibration. As the work regarding the position information measurement sensor, it is possible to perform not only the calibration but also other work. Therefore, for example, it is desirable to improve the work efficiency by using the member used for the calibration in other works, too.

In view of the above actual circumstance, the present invention has an object to provide a work vehicle in which the member used for the calibration is also used for other purposes to improve the work efficiency, and not only the calibration but also other work may be performed with regard to the position information measurement sensor.

There are multiple types of work devices coupled to the work vehicle, and the type of work device selected from the multiple types is coupled to the work vehicle in accordance with the working situation such as the work to be performed. When the work device falls within the measurement range of the distance sensor, it is necessary to set a masking range so as not to improperly detect the work device as an obstacle as described above.

As the size such as the height, the width, or the length of the work device differs depending on the type, the size of the work device that falls within the measurement range of the distance sensor also differs. Therefore, for example, it is possible to set a large range as a masking range so as not to improperly detect all types of work devices as an obstacle. However, if a large range is set as a masking range, the range in which obstacle detection is not executed is increased. Conversely, when the masking range is small, it is difficult to prevent the improper detection of all types of work devices as an obstacle while an increase in the range in which obstacle detection is not executed may be suppressed. Thus, when a masking range is set for multiple types of work devices, it is difficult to determine the range that is set as a masking range.

In view of the above actual circumstance, the present invention has an object to provide an obstacle detection system that may prevent the improper detection of a work device as an obstacle while suppressing an increase in the range in which obstacle detection is not executed.

### MEANS FOR SOLVING THE PROBLEMS

A first characteristic configuration of the present invention is that there are a distance sensor that is included in a work vehicle and is capable of measuring a distance to a measurement target; an obstacle control unit that executes collision avoidance control when detecting a measurement target within a predetermined distance as an obstacle based on a measurement result of the distance sensor; a masking range setting unit that sets a masking range in which obstacle detection is not executed and execution of the collision avoidance control by the obstacle control unit is restricted; and a range-of-movement acquisition unit that acquires a range of movement of a movable part that is movably provided in the work vehicle, wherein the masking range setting unit sets the masking range in accordance with the range of movement acquired by the range-of-movement acquisition unit.

With this configuration, as the range-of-movement acquisition unit acquires the range of movement corresponding to the movable part, the masking range setting unit may set the masking range in accordance with the range of movement acquired by the range-of-movement acquisition unit. Therefore, the masking range is not too large or too small with respect to the range of movement of the movable part and may be set to the range that includes the range of movement of the movable part and that is suitable for the movable part. This makes it possible to properly set the masking range for the movable part; thus, it is possible to prevent the improper detection of the movable part as an obstacle while suppressing an increase in the range in which obstacle detection is not executable.

A second characteristic configuration of the present invention is that a work device movably coupled to the work vehicle is provided as the movable part, and the range-of-movement acquisition unit acquires the range of movement when the work device is actually moved.

With this configuration, as the range-of-movement acquisition unit acquires the range of movement when the work device is actually moved, the accurate range of movement of the work device during the actual work with the work device may be acquired. Accordingly, as the masking range setting unit may properly set the masking range in accordance with the actual work with the work device, it is possible to prevent the improper detection of the movable part as an obstacle more properly while suppressing an increase in the range in which obstacle detection is not executable more properly.

A third characteristic configuration of the present invention is that the masking range setting unit variably sets the masking range in accordance with a moving state of the work device.

For example, when the masking range is set to a certain range corresponding to the entire range of movement of the work device, the masking range is increased due to the moving work device, and there is a possibility that the range in which obstacle detection is not executable is increased due to the moving state of the work device. Therefore, with this configuration, the masking range setting unit variably sets the masking range in accordance with the moving state of the work device. Thus, it is possible to set the appropriate masking range in accordance with the moving state of the work device, and it is possible to prevent an increase in the range in which obstacle detection is not executable.

A fourth characteristic configuration of the present invention is that there is a storage unit that stores type/range-of-movement information associating a type of the work device with the range of movement acquired by the range-of-movement acquisition unit, wherein the masking range setting unit sets the masking range in accordance with the type of the work device actually coupled to the work vehicle and the type/range-of-movement information stored in the storage unit.

Although there are multiple types of work devices, the ranges of movement of the work devices may be classified depending on the type. Therefore, with this configuration, the storage unit stores the type/range-of-movement information associating the type of work device with the range of movement. When the masking range setting unit has acquired the type of work device actually coupled to the work vehicle, it may acquire the range of movement associated with the type of work device from the type/range-of-movement information stored in the storage unit and set the masking range suitable for the work device in accordance with the range of movement. This allows for example the user to set the masking range suitable for the work device by simply inputting the type of work device actually coupled to the work vehicle, whereby it is possible to simplify the operation of setting the masking range.

A fifth characteristic configuration of the present invention is that there is an external output unit capable of outputting the type/range-of-movement information stored in the storage unit to an external unit through communication with the external unit.

With this configuration, as the external output unit may output the type/range-of-movement information stored in the storage unit to an external management device, other work vehicles, or the like, through the communication with an external unit, the masking range for other work vehicles may be set by using the output type/range-of-movement information. As described above, the acquisition of the type/range-of-movement information makes it possible to set the masking range suitable for the work device in a different work vehicle when for example the user simply inputs the type of work device actually coupled to the different work vehicle. Thus, the types/range-of-movement information is the shared information that is shared by a plurality of work vehicles, and the setting of the masking range for the work vehicles may be simplified by using the shared information.

A sixth characteristic configuration of the present invention is that there are a position information measurement sensor that measures position information about a measurement target around a work vehicle main body; a calibration processing unit that performs a calibration process to calibrate an installation state of the position information measurement sensor in the work vehicle main body to a desired state; and a masking range setting unit that sets a masking range within a measurement range of the position information measurement sensor, the masking range being a range excluded from measurement of the position information, wherein the position information measurement sensor is disposed in a state, where part of the work vehicle main body or of a member equipped to the work vehicle main body is included in the measurement range, the calibration processing unit uses the part of the work vehicle main body or of the member equipped to the work vehicle main body, which is included in the measurement range of the position information measurement sensor, to perform the calibration process based on measurement information of the position information measurement sensor, and the masking range setting unit uses the part of the work vehicle main body or of the member equipped to the work vehicle main body, which is included in the measurement range of the position information measurement sensor, to set the masking range based on the measurement information of the position information measurement sensor after the installation state of the position information measurement sensor is calibrated to the desired state.

With this configuration, as the part of the work vehicle main body or of the member equipped to the work vehicle main body is included in the measurement range of the position information measurement sensor, the calibration processing unit performs a calibration process so that the user, or the like, may understand the position where the part of the work vehicle main body or of the member equipped to the work vehicle main body is located in the measurement range of the position information measurement sensor. As the part of the work vehicle main body or of the member equipped to the work vehicle main body is located at a predetermined position, the user, or the like, may determine whether the position where the part of the work vehicle main body or of the member equipped to the work vehicle main body is shifted from the predetermined position and the position shift amount. Therefore, the user, or the like, may perform calibration to adjust the installation state (the installation position, the installation direction, etc.) of the position information measurement sensor and set the installation state of the position information measurement sensor to the desired state. Furthermore, as the part of the work vehicle main body or of the member equipped the work vehicle main body is used to calibrate the position information measurement sensor, there is no need to, for example, attach and detach the calibration jig to and from the work vehicle main body, or the like, and the inconvenient operation may be reduced.

As the work vehicle main body or the member provided in the work vehicle main body is not the measurement target around the work vehicle main body, the masking range setting unit sets, as a masking range, the range that is included in the measurement range of the position information measurement sensor and that corresponds to the work vehicle main body or the member provided in the work vehicle main body. The masking range setting unit may acquire the accurate position information from the measurement information of the position information measurement sensor after the calibration and may use the work vehicle main body or the member provided in the work vehicle main body to set the appropriate masking range. Moreover, as the work vehicle main body or the member provided in the work vehicle main body may be used for not only the calibration of the position information measurement sensor but also for the setting of the masking range of the position information measurement sensor, the calibration of the position information measurement sensor and the setting of the masking range of the position information measurement sensor may be executed while the effective use of the work vehicle main body or the member provided in the work vehicle main body and an improvement in the working efficiency may be achieved.

A seventh characteristic configuration of the present invention is that the position information measurement sensor includes a plurality of position information measurement sensors including a first position information measurement sensor that is disposed in a state, where the part of the work vehicle main body or of the member equipped to the work vehicle main body is included in a measurement range, and a second position information measurement sensor that is disposed in a state, where the part of the work vehicle main body or of the member equipped to the work vehicle main body is not included in a measurement range, there is a calibration jig that is disposed in a state where the calibration jig is included in the measurement range of the second position information measurement sensor, and the calibration processing unit uses the calibration jig included in the measurement range of the second position information measurement sensor to perform the calibration process by based on measurement information of the second position information measurement sensor.

In some cases, the work vehicle main body includes not only the first position information measurement sensor that is disposed such that the part of the work vehicle main body or of the member equipped to the work vehicle main body is included in the measurement range but also the second position information measurement sensor that is disposed such that the part of the work vehicle main body or of the member equipped to the work vehicle main body is not included in the measurement range. In this case, it is difficult for the calibration processing unit to perform a calibration process on the second position information measurement sensor by using the part of the work vehicle main body or of the member equipped to the work vehicle main body.

Therefore, with this configuration, the calibration jig that may be disposed so as to be included in the measurement range of the second position information measurement sensor is provided. Thus, the calibration processing unit may perform the calibration process by using the calibration jig included in the measurement range of the second position information measurement sensor so as to calibrate the second position information measurement sensor as appropriate.

An eighth characteristic configuration of the present invention is that the calibration jig is configured to be attachable to and detachable from the work vehicle main body.

With this configuration, as the calibration jig is attachable to and detachable from the work vehicle main body, it may be provided in the work vehicle main body such that the position shift with respect to the work vehicle main body is as little as possible. Thus, the calibration processing unit may perform the calibration process as appropriate by using the calibration jig included in the measurement range of the second position information measurement sensor and accurately calibrate the second position information measurement sensor.

A ninth characteristic configuration of the present invention is that the position information measurement sensor includes a distance sensor that measures a distance to a measurement target in three dimensions as position information, there is an obstacle detection unit that detects a measurement target within a predetermined distance as an obstacle based on measurement information of the distance sensor, and the masking range setting unit sets, as the masking range, a range in which the obstacle detection unit refrains from executing obstacle detection.

When the part of the work vehicle main body or of the member equipped to the work vehicle main body is included in the measurement range of the distance sensor, there is a possibility that the obstacle detection unit improperly detects the part of the work vehicle main body or the member equipped to the work vehicle main body as an obstacle. Therefore, with this configuration, the masking range setting unit sets, as a masking range, the range in which the obstacle detection unit refrains from detecting obstacles. Accordingly, an obstacle may be detected while the part of the work vehicle main body or of the member equipped to the work vehicle main body is prevented from being improperly detected as an obstacle; thus, the work vehicle main body may travel while the collision between the work vehicle main body and an obstacle is avoided.

A tenth characteristic configuration of the present invention is that there are a distance sensor that is included in a work vehicle and is capable of measuring a distance to a measurement target; an obstacle control unit that detects a measurement target within a predetermined distance as an obstacle based on a measurement result of the distance sensor and executes collision avoidance control; a masking range setting unit that sets a masking range in which obstacle detection is not executed and in which execution of the collision avoidance control by the obstacle control unit is restricted; and a storage unit that stores, with regard to a work device flexibly coupled to the work vehicle, type/range-of-movement information associating a type of the work device with a range of movement of the work device, wherein the masking range setting unit sets the masking range in accordance with the type of the work device actually coupled to the work vehicle and the type/range-of-movement information stored in the storage unit.

Although there are multiple types of work devices, the ranges of movement of the work devices may be classified depending on the type. Therefore, with this configuration, the storage unit stores the type/range-of-movement information associating the type of work device with the range of movement. When the masking range setting unit has simply acquired the type of work device actually coupled to the work vehicle, it may identify the range of movement corresponding to the work device from the type/range-of-movement information stored in the storage unit and set the masking range in accordance with the identified range of movement. This allows for example the user to set the masking range suitable for the work device by simply inputting the type of work device actually coupled to the work vehicle, whereby it is possible to simplify the operation of setting the masking range and to properly set the masking range for the work device.

An eleventh characteristic configuration of the present invention is that the masking range setting unit variably sets the masking range in accordance with a moving state of the work device.

For example, when the masking range is set to a certain range corresponding to the entire range of movement of the work device, the masking range is increased due to the moving work device, and there is a possibility that the range in which obstacle detection is not executable is increased due to the moving state of the work device. Therefore, with this configuration, the masking range setting unit variably sets the masking range in accordance with the moving state of the work device. Thus, it is possible to set the appropriate masking range in accordance with the moving state of the work device, and it is possible to prevent an increase in the range in which obstacle detection is not executable.

A twelfth characteristic configuration of the present invention is that the masking range setting unit is capable of correcting the masking range in accordance with the range of movement when the work device coupled to the work vehicle is actually moved.

With this configuration, the masking range setting unit may correct the masking range in accordance with the accurate range of movement of the work device during the actual work with the work device and may properly set the masking range corresponding to the actual work with the work device. Thus, it is possible to prevent the improper detection of the work device as an obstacle more properly while suppressing an increase in the range in which obstacle detection is not executable more properly.

### BRIEF DESCRIPTION OF DRAWINGS

FIG. 1 is a diagram illustrating a schematic configuration of an automatic travel system.
FIG. 2 is a block diagram illustrating a schematic configuration of the automatic travel system.
FIG. 3 is a diagram illustrating a target travel path.
FIG. 4 is a diagram illustrating an upper side portion of a tractor in a front view.
FIG. 5 is a diagram illustrating an upper side portion of the tractor in a rear view.
FIG. 6 is a diagram illustrating an antenna unit and a front lidar sensor in the use position in a side view.
FIG. 7 is a perspective view illustrating a support structure for the antenna unit and the front lidar sensor.
FIG. 8 is a diagram illustrating the antenna unit and the front lidar sensor in the non-use position in a side view.
FIG. 9 is a diagram illustrating a roof, the antenna unit, the front lidar sensor, and a rear lidar sensor in the use position and the non-use position in a side view.
FIG. 10 is a perspective view illustrating a support structure for the rear lidar sensor.
FIG. 11 is a diagram illustrating measurement ranges of the front lidar sensor and the rear lidar sensor in a side view.
FIG. 12 is a diagram illustrating measurement ranges of the front lidar sensor, the rear lidar sensor, and sonar units in a plan view.
FIG. 13 is a diagram illustrating a three-dimensional image generated from a measurement result of the front lidar sensor.
FIG. 14 is a diagram illustrating a three-dimensional image generated from a measurement result of the rear lidar sensor with a work device located in the lowering position.
FIG. 15 is a diagram illustrating a three-dimensional image generated from a measurement result of the rear lidar sensor with the work device located in the lifting position.
FIG. 16 is a flowchart illustrating a flow of operations in a first masking process.
FIG. 17 is a diagram illustrating measurement ranges of the front lidar sensor and the rear lidar sensor in a side view when a front work device is coupled.
FIG. 18 is a diagram illustrating a three-dimensional image generated from a measurement result of the front lidar sensor.
FIG. 19 is a flowchart illustrating a flow of operations in a second masking process.
FIG. 20 is a table illustrating type/range-of-movement information.
FIG. 21 is a diagram illustrating an input screen for work device data.
FIG. 22 is a flowchart illustrating a flow of operations in a third masking process.
FIG. 23 is a block diagram illustrating a schematic configuration of an automatic travel system.
FIG. 24 is a diagram illustrating measurement ranges of the front lidar sensor, the rear lidar sensor, and the sonar units in a plan view.
FIG. 25 is a diagram illustrating a three-dimensional image generated from measurement information of the front lidar sensor when the front lidar sensor is calibrated.
FIG. 26 is a diagram illustrating a three-dimensional image generated from measurement information of the rear lidar sensor with the work device located in the lowering position when the rear lidar sensor is calibrated.
FIG. 27 is a flowchart illustrating a flow of operations in a calibration process and a masking process.
FIG. 28 is a diagram illustrating measurement ranges of the front lidar sensor and the rear lidar sensor in a side view with a front calibration jig and a rear calibration jig attached.
FIG. 29 is a diagram illustrating a three-dimensional image generated from measurement information of the rear lidar sensor when the rear lidar sensor is calibrated.
FIG. 30 is a diagram illustrating a three-dimensional image generated from measurement information of the front lidar sensor when the front lidar sensor is calibrated.
FIG. 31 is a block diagram illustrating a schematic configuration of an automatic travel system.
FIG. 32 is a flowchart illustrating a flow of operations in a second masking process.
FIG. 33 is a table illustrating type/range-of-movement information.
FIG. 34 is a diagram illustrating a three-dimensional image generated from a measurement result of the rear lidar sensor with the work device located in the lowering position.
FIG. 35 is a diagram illustrating a three-dimensional image generated from a measurement result of the rear lidar sensor with the work device located in the lifting position.

### DESCRIPTION OF EMBODIMENTS

An embodiment in a case where a work vehicle including an obstacle detection system according to the present invention is applied to an automatic travel system is described with reference to the drawings.

### [First Embodiment]

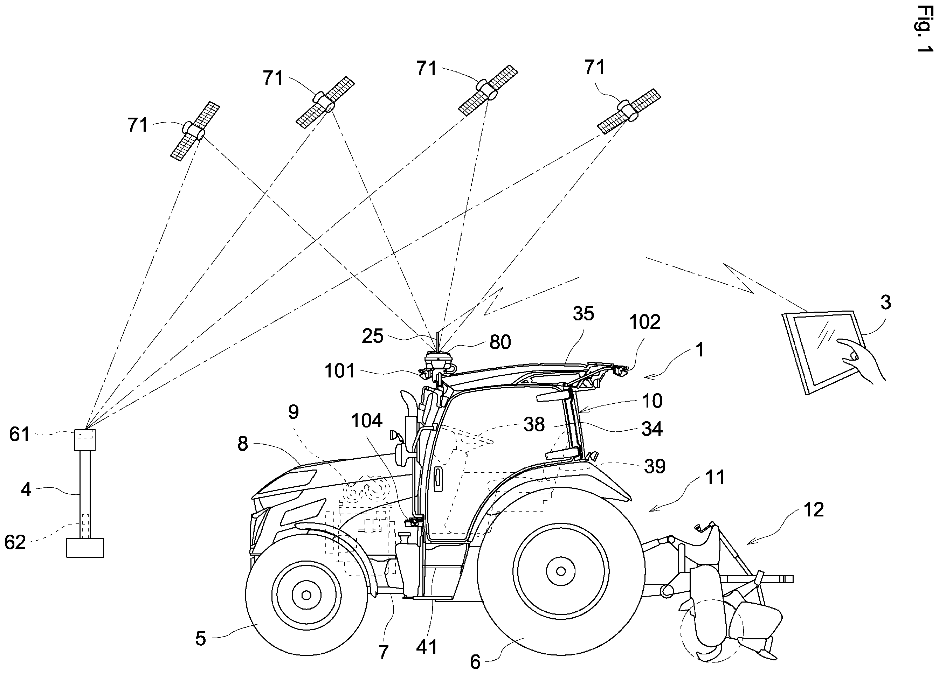

As illustrated in FIG. 1, the automatic travel system uses a tractor 1 as a work vehicle; however, it may use, other than a tractor, a passenger work vehicle such as a passenger rice planter, a combine, a passenger mower, a wheel loader, or a snowplow, and an unmanned work vehicle such as an unmanned mower.

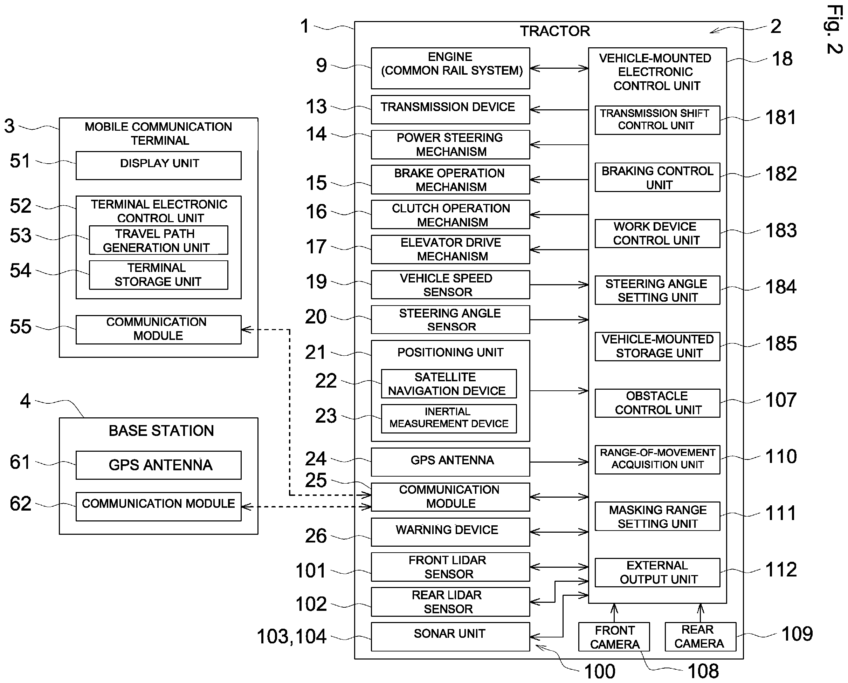

As illustrated in FIG. 1 and FIG. 2, the automatic travel system includes: an automatic travel unit 2 installed in the tractor 1; and a mobile communication terminal 3 that has the communication settings so as to communicate with the automatic travel unit 2. A tablet-type personal computer or a smartphone including a touchable display unit 51 (e.g., a liquid crystal panel), or the like, may be used as the mobile communication terminal 3.

The tractor 1 includes a traveling body 7 including right and left front wheels 5 serving as wheels that may be driven and steered and right and left rear wheels 6 that may be driven. A hood 8 is provided on the front side of the traveling body 7, and an electronically controlled diesel engine (hereinafter referred to as engine) 9 including a common rail system is provided within the hood 8. A cabin 10 forming a passenger driving part is provided on the rear side of the hood 8 of the traveling body 7.

The rear portion of the traveling body 7 is coupled to a rotary tiller, which is an example of a work device 12, in a liftable/lowerable and rotatable manner via a three-point link mechanism 11 so that the tractor 1 may be designed for rotary tilling. Instead of the rotary tiller, the rear portion of the tractor 1 may be coupled to the work device 12 such as a plow, a harrow, a vertical harrow, a stubble cultivator, a seed planter, or a spraying device.

As illustrated in FIG. 2, the tractor 1 includes, for example, an electronically controlled transmission device 13 that shifts gears for the power from the engine 9; a full hydraulic power steering mechanism 14 that steers the right and left front wheels 5; right and left parking brakes (not illustrated) that control the right and left rear wheels 6; an electronically controlled brake operation mechanism 15 that enables the hydraulic operation of the right and left parking brakes; a working clutch (not illustrated) that intermittently transmits the power to the work device 12 such as a rotary tiller; an electronically controlled clutch operation mechanism 16 that enables the hydraulic operation of the working clutch; an electrohydraulic controlled elevator drive mechanism 17 that drives and elevates the work device 12 such as a rotary tiller; a vehicle-mounted electronic control unit 18 that stores various types of control programs, or the like, regarding the automatic travel of the tractor 1; a vehicle speed sensor 19 that detects the vehicle speed of the tractor 1; a steering angle sensor 20 that detects the steering angle of the front wheel 5; a positioning unit 21 that measures the current position or the current orientation of the tractor 1.

Furthermore, an electronically controlled gasoline engine including an electronic governor may be used as the engine 9. A hydromechanical variable transmission (HMT), a hydrostatic variable transmission (HST), a belt-type variable transmission, or the like, may be used as the transmission device 13. The electrically operated power steering mechanism 14, or the like, including an electric motor may be used as the power steering mechanism 14.

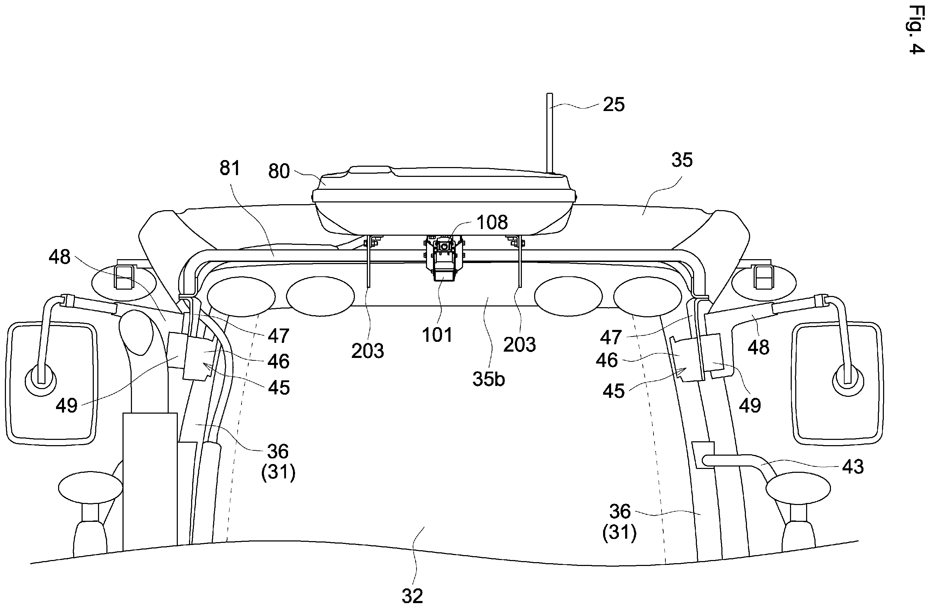

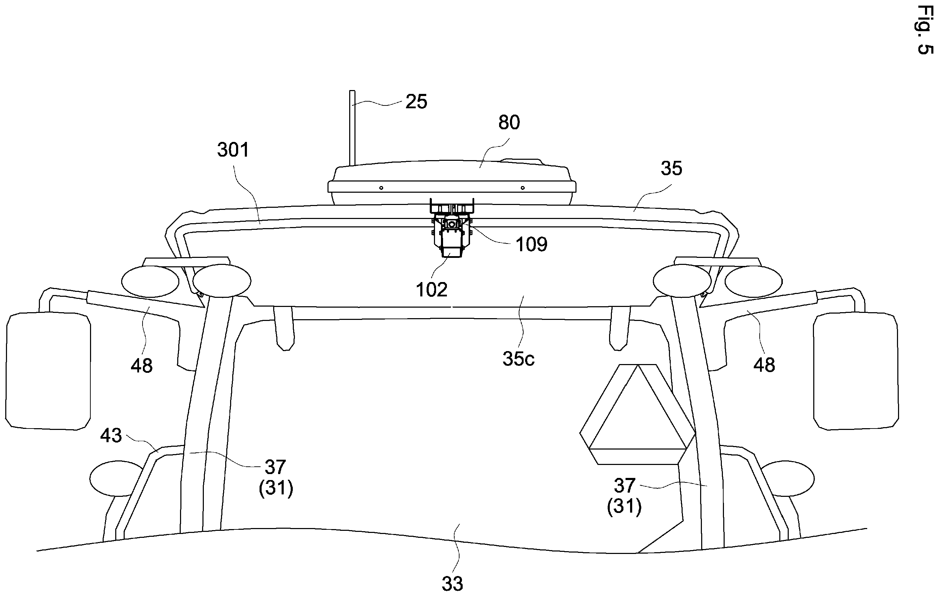

As illustrated in FIG. 4 and FIG. 5, the cabin 10 is formed in a box shape including: a cabin frame 31 forming the framework of the cabin 10; a front window 32 that covers the front side; a rear window 33 that covers the rear side; a pair of right and left doors 34 (see FIG. 1) that may be swung to open and close around the axial center extending in a vertical direction; and a roof 35 on the ceiling side. The cabin frame 31 includes: a pair of right and left front pillars 36 disposed at the front end; and a pair of right and left rear pillars 37 disposed at the rear end. In a plan view, the front pillars 36 are provided at the corners on the right and left sides of the front side, and the rear pillars 37 are provided at the corners on the right and left sides of the rear side. The cabin frame 31 is supported on the traveling body 7 via a vibration-proof member such as an elastic body so that the cabin 10 is provided in such a manner that the preventive measures are taken against the vibration transmitted from the traveling body 7, or the like, to the cabin 10.

As illustrated in FIG. 1, the cabin 10 includes, for example, a steering wheel 38 that enables the manual steering of the right and left front wheels 5 via the power steering mechanism 14 (see FIG. 2); a driver's seat 39 for a passenger; a touch panel display unit; and various operating tools. On both lateral sides of the front part of the cabin 10, there are boarding steps 41 serving as boarding areas for the cabin 10 (the driver's seat 39).

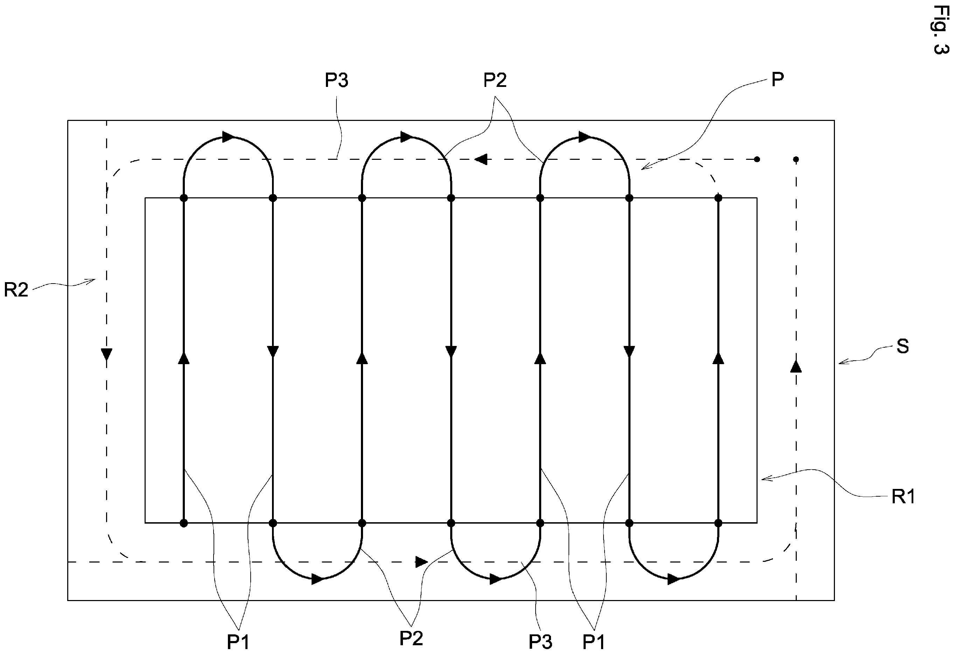

As illustrated in FIG. 2, the vehicle-mounted electronic control unit 18 includes for example, a transmission shift control unit 181 that controls the operation of the transmission device 13; a braking control unit 182 that controls the operation of the right and left parking brakes; a work device control unit 183 that controls the operation of the work device 12 such as a rotary tiller; a steering angle setting unit 184 that sets the target steering angle of the right and left front wheels 5 during the automatic travel and outputs it to the power steering mechanism 14; and a non-volatile vehicle-mounted storage unit 185 that stores, for example, a preset target travel path P (see FIG. 3) for the automatic travel.

As illustrated in FIG. 2, the positioning unit 21 includes, for example, a satellite navigation device 22 that uses the Global Positioning System (GPS), which is an example of a satellite positioning system navigation satellite system (NSS), to measure the current position and the current orientation of the tractor 1; and an inertial measurement device inertial measurement unit (IMU) 23 that includes, for example, a three-axis gyroscope and a three-direction acceleration sensor to measure the attitude, the orientation, or the like, of the tractor 1. The positioning methods using the GPS include, for example, differential GPS (DGPS), a relative positioning method) and real time Kinematic GPS (RTK-GPS), an interference positioning method). According to the present embodiment, RTK-GPS suitable for the positioning of a movable object is used. Therefore, as illustrated in FIG. 1 and FIG. 2, a base station 4 that enables the positioning using RTK-GPS is provided at a known location around a field.

As illustrated in FIG. 2, the tractor 1 and the base station 4 include, for example, GPS antennas 24, 61 that receive radio waves transmitted from GPS satellites 71 (see FIG. 1); and communication modules 25, 62 that enable wireless communications of various types of data (various types of information) including the positioning data (positioning information) between the tractor 1 and the base station 4, respectively. This allows the satellite navigation device 22 to measure the current position and the current orientation of the tractor 1 with high accuracy based on the positioning data obtained when the GPS antenna 24 on the tractor side receives a radio wave from the GPS satellite 71 and the positioning data obtained when the GPS antenna 61 on the base station side receives a radio wave from the GPS satellite 71. Furthermore, with the satellite navigation device 22 and the inertial measurement device 23, the positioning unit 21 may measure the current position, the current orientation, and the attitude angle (the yaw angle, the roll angle, the pitch angle) of the tractor 1 with high accuracy.

As illustrated in FIG. 1, the GPS antenna 24, the communication module 25, and the inertial measurement device 23 provided in the tractor 1 are housed in an antenna unit 80. The antenna unit 80 is disposed on the upper position on the front side of the cabin 10.

As illustrated in FIG. 2, the mobile communication terminal 3 includes, for example, a terminal electronic control unit 52 that stores various control programs for controlling the operation of the display unit 51, or the like; and a communication module 55 that enables wireless communications of various types of data including the positioning data with the communication module 25 on the tractor side. The terminal electronic control unit 52 includes, for example, a travel path generation unit 53 that generates the target travel path P (for example, see FIG. 3) for travel guide so as to cause the tractor 1 to travel automatically; and a non-volatile terminal storage unit 54 that stores, for example, various types of input data (input information) that is input by a user or the target travel path P generated by the travel path generation unit 53.

In order for the travel path generation unit 53 to generate the target travel path P, the vehicle body data such as the type and the model of a work vehicle or the work device 12 is input by a user such as a driver or an administrator in accordance with the input guidance for target travel path setting presented on the display unit 51 of the mobile communication terminal 3, and the input vehicle body data (vehicle body information) is stored in the terminal storage unit 54. A travel region S (see FIG. 3) for which the target travel path P is generated is a field, and the terminal electronic control unit 52 of the mobile communication terminal 3 acquires the field data (field information) including the shape and the position of the field and stores it in the terminal storage unit 54.

The acquisition of the field data is described; when the user, or the like, drives the tractor 1 so as to actually travel, the terminal electronic control unit 52 may acquire the positional information for identifying the shape, the position, and the like, of the field from the current position, and the like, of the tractor 1 acquired by the positioning unit 21. The terminal electronic control unit 52 specifies the shape and the position of the field from the acquired positional information and acquires the field data including the travel region S identified from the specified shape and position of the field. FIG. 3 illustrates an example in which the rectangular travel region S is identified.

When the terminal storage unit 54 stores the field data including the specified shape and position of the field, or the like, the travel path generation unit 53 uses the field data and the vehicle body data stored in the terminal storage unit 54 to generate the target travel path P.

As illustrated in FIG. 3, the travel path generation unit 53 sets and divides the travel region S into a central region R1 and an outer peripheral region R2. The central region R1 is set in the central part of the travel region S and is a round-trip work region where the tractor 1 automatically travels in a back-and-forth direction in advance to perform predetermined work (for example, work such as tilling). The outer peripheral region R2 is set around the central region R1 and is a go-around work region in which the tractor 1 automatically travels in a circling direction after the central region R1 to perform predetermined work. The travel path generation unit 53 obtains, for example, the turning travel space required for causing the tractor 1 to travel and turn near the dike of the field based on, for example, the turning radius, the longitudinal width and the lateral width of the tractor 1, and the like, included in the vehicle body data. The travel path generation unit 53 divides the travel region S into the central region R1 and the outer peripheral region R2 so as to ensure the space, or the like, defined on the outer periphery of the central region R1.

As illustrated in FIG. 3, the travel path generation unit 53 uses the vehicle body data, the field data, and the like, to generate the target travel path P. For example, the target travel path P includes: a plurality of work paths P1 having the identical straight distance and arranged parallel to each other with a certain distance corresponding to the work width in the central region R1; a connection path P2 that connects the start and the end of the adjacent work paths P1; and a circling path P3 (indicated by a dotted line in the figure) circling in the outer peripheral region R2. The work paths P1 are paths for performing predetermined work while the tractor 1 travels in a straight line. The connection path P2 is a U-turn path for changing the traveling direction of the tractor 1 by 180 degrees without performing predetermined work, and it connects the end of the work path P1 and the start of the subsequent adjacent work path P1. The circling path P3 is a path for performing predetermined work while the tractor 1 travels and circles in the outer peripheral region R2. The circling path P3 causes a switchover between the forward travel and the backward travel of the tractor 1 so as to change the traveling direction of the tractor 1 by 90 degrees at the positions corresponding to the four corners of the travel region S. Furthermore, the target travel path P illustrated in FIG. 3 is merely an example, and it is possible to optionally change the type of target travel path to be set.

The target travel path P generated by the travel path generation unit 53 may be displayed on the display unit 51 and is stored in the terminal storage unit 54 as the path data (path information) associated with the vehicle body data, the field data, etc. The path data includes, for example, the azimuth angle of the target travel path P, the set engine rotating velocity and the target travel speed set in accordance with the traveling mode, or the like, of the tractor 1 on the target travel path P.

After the travel path generation unit 53 thus generates the target travel path P, the terminal electronic control unit 52 transfers the path data from the mobile communication terminal 3 to the tractor 1 so that the vehicle-mounted electronic control unit 18 of the tractor 1 may acquire the path data. The vehicle-mounted electronic control unit 18 may cause the tractor 1 to automatically travel along the target travel path P while acquiring the current position of its own (the current position of the tractor 1) using the positioning unit 21 based on the acquired path data. The current position of the tractor 1 acquired using the positioning unit 21 is transmitted from the tractor 1 to the mobile communication terminal 3 in real time (for example, the cycle of several seconds) so that the mobile communication terminal 3 determines the current position of the tractor 1.

Regarding the transfer of the path data, the entire path data may be collectively transferred from the terminal electronic control unit 52 to the vehicle-mounted electronic control unit 18 before the tractor 1 starts to automatically travel. Furthermore, for example, the path data including the target travel path P may be divided into multiple path portions in each predetermined distance with a small amount of data. In this case, only the initial path portion in the path data is transferred from the terminal electronic control unit 52 to the vehicle-mounted electronic control unit 18 before the tractor 1 starts to automatically travel. After the start of the automatic travel, each time the tractor 1 reaches the path acquisition point, which is set in accordance with the amount of data, or the like, the path data on only the subsequent path portion corresponding to that point may be transferred from the terminal electronic control unit 52 to the vehicle-mounted electronic control unit 18.

To start the automatic travel of the tractor 1, for example, the user, or the like, moves the tractor 1 to the start point and, when various automatic travel start conditions are satisfied, the user operates the display unit 51 of the mobile communication terminal 3 to instruct the start of the automatic travel so that the mobile communication terminal 3 transmits the automatic travel start instruction to the tractor 1. Accordingly, in the tractor 1, the vehicle-mounted electronic control unit 18 receives the automatic travel start instruction and then starts the automatic travel control so as to cause the tractor 1 to automatically travel along the target travel path P while acquiring its own current position (the current position of the tractor 1) using the positioning unit 21. The vehicle-mounted electronic control unit 18 is configured as an automatic travel control unit that executes the automatic travel control so as to cause the tractor 1 to automatically travel along the target travel path P based on the positioning information on the tractor 1 acquired by the positioning unit 21 (corresponding to the satellite positioning system).

The automatic travel control includes, for example, the automatic transmission shift control for automatically controlling the operation of the transmission device 13, the automatic braking control for automatically controlling the operation of the brake operation mechanism 15, the automatic steering control for automatically steering the right and left front wheels 5, and the automatic control for work for automatically controlling the operation of the work device 12 such as a rotary tiller.

During the automatic transmission shift control, the transmission shift control unit 181 automatically controls the operation of the transmission device 13 so as to obtain, as the vehicle speed of the tractor 1, the target travel speed set in accordance with the travel mode, or the like, of the tractor 1 in the target travel path P based on the path data on the target travel path P including the target travel speed, the output of the positioning unit 21, and the output of the vehicle speed sensor 19.

During the automatic braking control, the braking control unit 182 automatically controls the operation of the brake operation mechanism 15 so as to cause the right and left parking brakes to properly apply a brake to the right and left rear wheels 6 in the braking region included in the path data on the target travel path P based on the target travel path P and the output of the positioning unit 21.

During the automatic steering control, to cause the tractor 1 to automatically travel on the target travel path P, the steering angle setting unit 184 obtains and sets the target steering angle of the right and left front wheels 5 based on the path data on the target travel path P and the output of the positioning unit 21 and outputs the set target steering angle to the power steering mechanism 14. The power steering mechanism 14 automatically steers the right and left front wheels 5 based on the target steering angle and the output of the steering angle sensor 20 so as to obtain the target steering angle as the steering angle of the right and left front wheels 5.

During the automatic control for work, the work device control unit 183 automatically controls the operations of the clutch operation mechanism 16 and the elevator drive mechanism 17 based on the path data on the target travel path P and the output of the positioning unit 21 such that the work device 12 starts predetermined work (e.g., tilling work) when the tractor 1 reaches the work start point that is for example the start of the work path P1 (for example, see FIG. 3) and the work device 12 stops the predetermined work when the tractor 1 reaches the work end point that is for example the end of the work path P1 (see, for example, FIG. 3).

Thus, the transmission device 13, the power steering mechanism 14, the brake operation mechanism 15, the clutch operation mechanism 16, the elevator drive mechanism 17, the vehicle-mounted electronic control unit 18, the vehicle speed sensor 19, the steering angle sensor 20, the positioning unit 21, the communication module 25, and the like, constitute the automatic travel unit 2 in the tractor 1.

According to the present embodiment, the tractor 1 may automatically travel without the user, or the like, boarding on the cabin 10 and also the tractor 1 may automatically travel with the user, or the like, boarding on the cabin 10. Therefore, the tractor 1 may automatically travel along the target travel path P under the automatic travel control by the vehicle-mounted electronic control unit 18 without the user, or the like, boarding on the cabin 10 and also the tractor 1 may automatically travel along the target travel path P under the automatic travel control by the vehicle-mounted electronic control unit 18 even with user, or the like, boarding on the cabin 10.

When the user, or the like, is boarding on the cabin 10, it is possible to switch between the automatic travel state in which the vehicle-mounted electronic control unit 18 causes the tractor 1 to automatically travel and the manual travel state in which the tractor 1 is traveled in accordance with the driving of the user, or the like. Therefore, it is possible to switch from the automatic travel state to the manual travel state in the middle of the automatic travel in the automatic travel state along the target travel path P and, conversely, switch from the manual travel state to the automatic travel state in the middle of the travel in the manual travel state. For the switching between the manual travel state and the automatic travel state, for example, a switch operating unit for switching between the automatic travel state and the manual travel state may be provided near the driver's seat 39, and the switch operating unit may be displayed on the display unit 51 of the mobile communication terminal 3. Furthermore, during the automatic travel control by the vehicle-mounted electronic control unit 18, the user may operate the steering wheel 38 to switch from the automatic travel state to the manual travel state.

As illustrated in FIG. 1 and FIG. 2, the tractor 1 includes an obstacle detection system 100 that detects an obstacle around the tractor 1 (the traveling body 7) to avoid a collision with the obstacle. The obstacle detection system 100 includes: a plurality of lidar sensors (corresponding to distance sensors) 101, 102 that may measure the distance to the measurement target in three dimensions using a laser; sonar units 103, 104 including a plurality of sonars that may measure the distance to the measurement target using ultrasonic waves; and an obstacle control unit 107. Here, the measurement target measured by the lidar sensors 101, 102 and the sonar units 103, 104 is an object, a person, etc.

The obstacle control unit 107 is configured to perform an obstacle detection process to detect the measurement target, such as an object or a person, within a predetermined distance as an obstacle based on the measurement information of the lidar sensors 101, 102 and the sonar units 103, 104 and, when an obstacle is detected during the obstacle detection process, execute a collision avoidance control. The obstacle control unit 107 repeatedly performs the obstacle detection process in real time based on the measurement information of the lidar sensors 101, 102 and the sonar units 103, 104 to properly detect an obstacle such as an object or a person, and executes the collision avoidance control to avoid the collision with the obstacle.

The vehicle-mounted electronic control unit 18 includes the obstacle control unit 107. The vehicle-mounted electronic control unit 18 is communicatively connected to an electronic control unit for an engine included in a common rail system, the lidar sensors 101, 102, the sonar units 103, 104, etc., via a controller area network (CAN).

The lidar sensors 101, 102 measure the distance to the measurement target based on the round-trip time during which the laser light (e.g., pulsed near-infrared laser light) hits the measurement target and returns back (Time of Flight). The lidar sensors 101, 102 scan the laser light at high speed in the vertical direction and in the horizontal direction and sequentially measure the distance to the measurement target at each scan angle so as to measure the distance to the measurement target in three dimensions. The lidar sensors 101, 102 repeatedly measure the distance to the measurement target within the measurement range in real time. The lidar sensors 101, 102 are configured to generate a three-dimensional image from the measurement result and output it to an external unit. A display device such as a display unit of the tractor 1 or the display unit 51 of the mobile communication terminal 3 may display a three-dimensional image generated from the measurement result (measurement information) of the lidar sensors 101, 102 to prompt the user, or the like, to visually recognize the presence or absence of an obstacle. Further, a three-dimensional image may represent the distance in a depth direction by using colors, or the like.

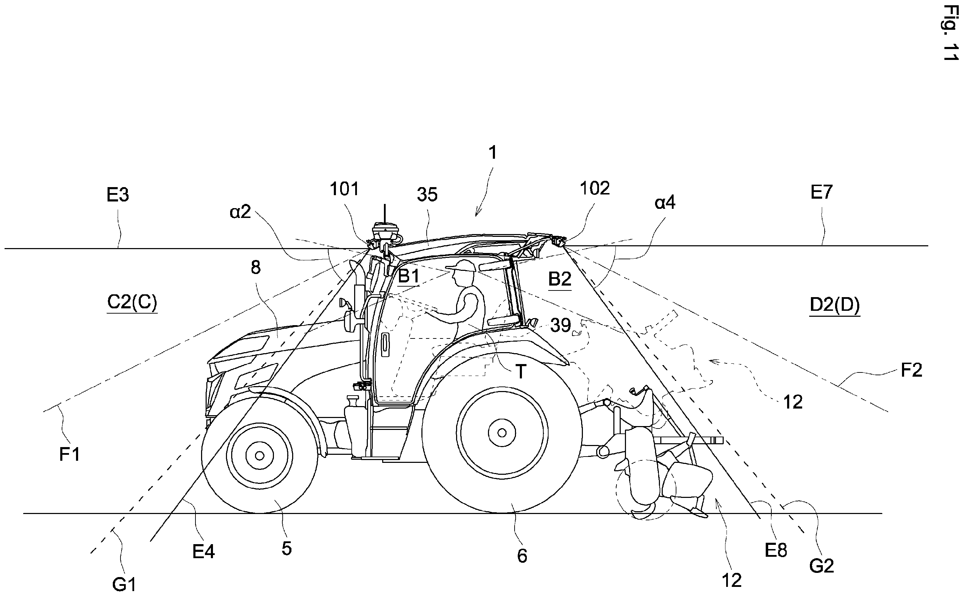

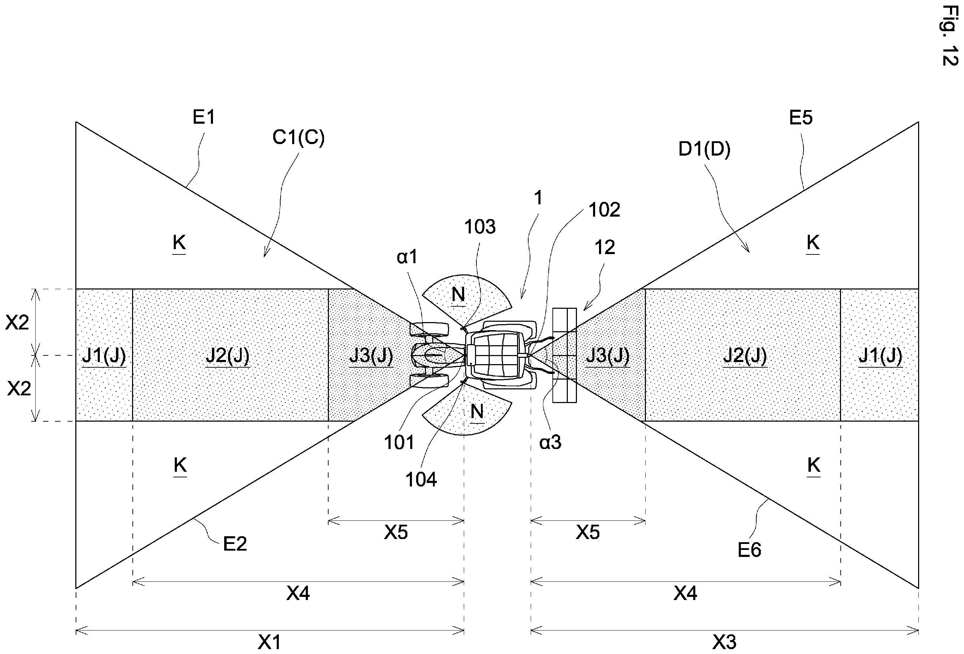

As illustrated in FIG. 11 and FIG. 12, as the lidar sensors 101, 102, the front lidar sensor 101 is provided to be used for detecting an obstacle on the front side of the tractor 1 (the traveling body 7) when the front side of the tractor 1 is set as a measurement range C, and the rear lidar sensor 102 is provided to be used for detecting an obstacle on the rear side of the tractor 1 (the traveling body 7) when the rear side of the tractor 1 is set as a measurement range D.

The front lidar sensor 101 and the rear lidar sensor 102 are described below; a support structure of the front lidar sensor 101, a support structure of the rear lidar sensor 102, the measurement range C for the front lidar sensor 101, and the measurement range D for the rear lidar sensor 102 are sequentially described.

The support structure of the front lidar sensor 101 is described.

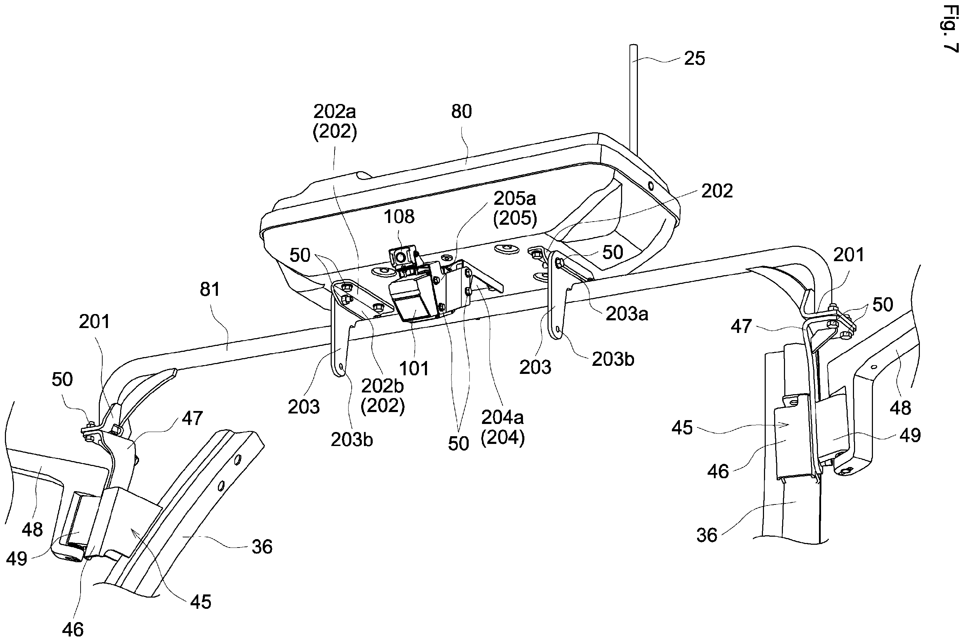

As illustrated in FIG. 1 and FIG. 7, the front lidar sensor 101 is attached to the bottom of the antenna unit 80 disposed at the upper position of the front side of the cabin 10; therefore, the support structure of the antenna unit 80 is first described and then the attachment structure of the front lidar sensor 101 to the bottom of the antenna unit 80 is described.

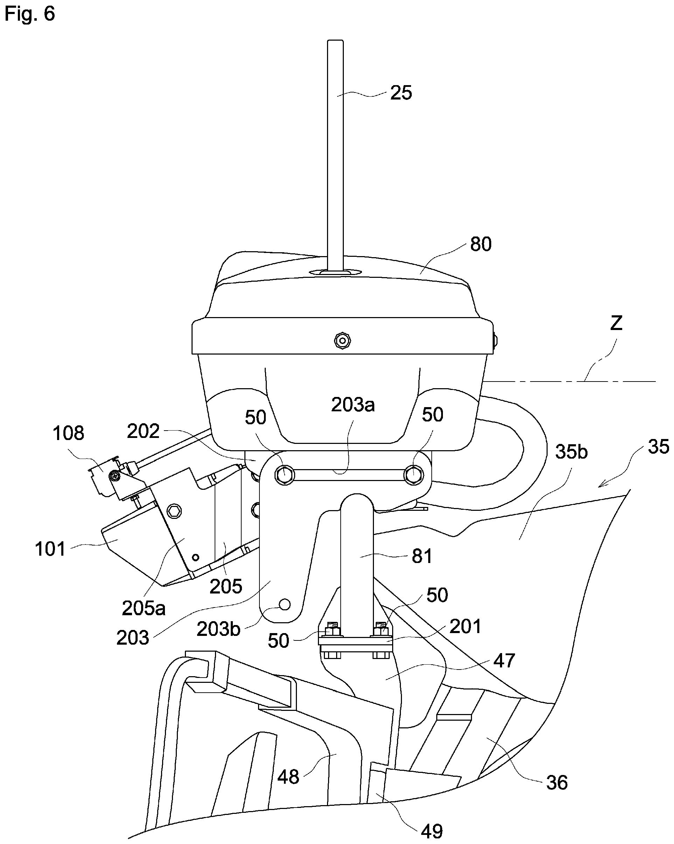

As illustrated in FIG. 4, FIG. 6, and FIG. 7, the antenna unit 80 is attached to a pipe-shaped antenna-unit support stay 81 extending over the entire length of the cabin 10 in the right-and-left direction of the traveling body 7. The antenna unit 80 is disposed at the position corresponding to the central part of the cabin 10 in the right-and-left direction of the traveling body 7. The antenna-unit support stay 81 is fixedly connected across right and left mirror attachment units 45 located on the right and left diagonally forward sides of the cabin 10. The mirror attachment unit 45 includes: a mirror attachment base 46 fixed to the front pillar 36, a mirror attachment bracket 47 secured to the mirror attachment base 46, and a mirror attachment arm 48 that is rotatable with a hinge portion 49 provided on the mirror attachment bracket 47. As illustrated in FIG. 7, the antenna-unit support stay 81 is formed in a bridge shape having the right and left end portions curved downward. The right and left end portions of the antenna-unit support stay 81 are fixedly connected to the upper end portion of the mirror attachment bracket 47 via a first attachment plate 201. As illustrated in FIG. 6 and FIG. 7, a transversal plane attachment surface is formed on the upper end portion of the mirror attachment bracket 47, and a transversal plane attachment surface is also formed on the lower end portion of the first attachment plate 201. Both the attachment surfaces are stacked in a vertical direction and fastened with a connector 50 such as a bolt and a nut so that the antenna-unit support stay 81 is fixedly connected in the posture of extending in the horizontal direction. As the antenna unit 80 is supported by the front pillars 36 forming the cabin frame 31 via the antenna-unit support stay 81 and the mirror attachment unit 45, the antenna unit 80 is firmly supported while the transmission of vibrations, or the like, to the antenna unit 80 is prevented.

As illustrated in FIG. 6 and FIG. 7, with regard to the attachment structure of the antenna unit 80 to the antenna-unit support stay 81, a second attachment plate 202 secured to the antenna unit 80 side and a third attachment plate 203 secured to the antenna-unit support stay 81 side are fastened with the connector 50 such as a bolt and a nut so that the antenna unit 80 is attached to the antenna-unit support stay 81.

As illustrated in FIG. 7, the pair of right and left second attachment plates 202 are provided with a predetermined interval in the right-and-left direction of the traveling body 7. The second attachment plate 202 is formed in a plate-like member that is bent in an L shape and includes a stay-side attachment portion 202b extending downward from the outer edge of a unit-side attachment portion 202a extending in the right-and-left direction. The second attachment plate 202 is attached in such a posture that the unit-side attachment portion 202a is fixedly connected to the bottom of the antenna unit 80 with the connector 50, or the like, and the stay-side attachment portion 202b extends downward. Although not illustrated, a pair of front and rear circular holes for the connection with a connector, or the like, are formed on the stay-side attachment portion 202b of the second attachment plate 202.

As illustrated in FIG. 6 and FIG. 7, the third attachment plate 203 is formed of an L-shaped plate-like member whose front side portion extends downward as compared with the rear side portion thereof. As is the case with the second attachment plate 202, the pair of right and left third attachment plates 203 are provided with a predetermined interval in the right-and-left direction of the traveling body 7. The third attachment plate 203 is attached in such a posture that the lower edge of the rear side portion is fixedly connected to the upper portion of the antenna-unit support stay 81 by welding, or the like, and the front side portion is positioned in front of the antenna-unit support stay 81. The third attachment plate 203 is provided with an elongated hole 203a extending from the front side portion to the rear side portion in the front-and-back direction of the traveling body 7 and is provided with a circular hole 203b for the connection on the lower side of the front side portion.

To attach the antenna unit 80 to the antenna-unit support stay 81, as illustrated in FIG. 6 and FIG. 7, the antenna unit 80 is disposed above the antenna-unit support stay 81 and is provided in the use position such that the antenna of the communication module 25 extends upward. The second attachment plate 202 and the third attachment plate 203 are overlapped with each other such that the second attachment plate 202 is positioned on the inner side of the third attachment plate 203 so that the front and rear circular holes of the stay-side attachment portion 202b of the second attachment plate 202 match the front side end and the rear side end of the elongated hole 203a of the third attachment plate 203. The connectors 50 are inserted into the front and rear circular holes of the second attachment plate 202 and the elongated hole 203a of the third attachment plate 203 and are fastened so that the antenna unit 80 may be attached to the antenna-unit support stay 81 in the use position. Here, the positions corresponding to the front side end and the rear side end of the elongated hole 203a are set as the connection positions with the connectors 50, and the four positions in total at the front side portion and the rear side portion of the right and left second attachment plates 202 in a pair and the right and left third attachment plates 203 in a pair are the connection positions with the connectors 50.

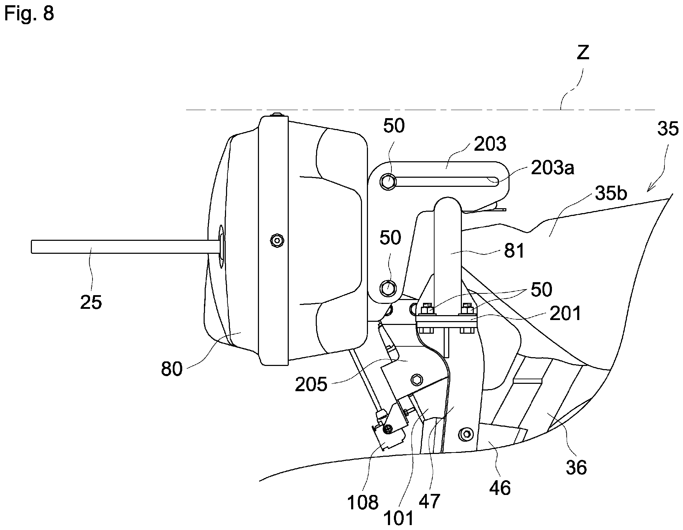

The antenna unit 80 is configured to be flexibly attached to the antenna-unit support stay 81 not only in the use position illustrated in FIG. 6 but also in the non-use position where the antenna unit 80 is located in front of the antenna-unit support stay 81 and the antenna of the communication module 25 extends forward as illustrated in FIG. 8.

To attach the antenna unit 80 to the antenna-unit support stay 81 in the non-use position, as illustrated in FIG. 8, the second attachment plate 202 and the third attachment plate 203 are overlapped with each other such that the second attachment plate 202 is positioned on the inner side of the third attachment plate 203 so that the antenna unit 80 is in the non-use position and the front and rear circular holes of the stay-side attachment portion 202b of the second attachment plate 202 match the circular hole 203b and the front side end of the elongated hole 203a of the third attachment plate 203. The connector 50 is inserted through the front circular hole of the stay-side attachment portion 202b of the second attachment plate 202 and the circular hole 203b of the third attachment plate 203, and the connector 50 is inserted through the rear circular hole of the stay-side attachment portion 202b of the second attachment plate 202 and the front side end of the elongated hole 203a and is fastened so that the antenna unit 80 may be attached to the antenna-unit support stay 81 in the use position.

For example, to change the antenna unit 80 from the use position (see FIG. 6) to the non-use position (see FIG. 8), as illustrated in FIG. 6, the connector 50 provided at the front side end of the elongated hole 203a of the third attachment plate 203 is removed, and the connector 50 provided at the rear side end of the elongated hole 203a of the third attachment plate 203 is loosened so that the inserting state of the connector 50 through the elongated hole 203a is maintained. The connector 50 is moved forward from the rear side end to the front side end along the elongated hole 203a, and the antenna unit 80 is hung downward on the front side with the connector 50 as a pivot so that, as illustrated in FIG. 8, the position of the antenna unit 80 is changed to the non-use position. Thus, the connector 50 may be inserted through the front circular hole of the second attachment plate 202 and the circular hole 203b of the third attachment plate 203, and the connector 50 may be inserted through the rear circular hole of the second attachment plate 202 and the front side end of the elongated hole 203a and may be fastened, whereby the position of the antenna unit 80 may be changed from the use position to the non-use position.

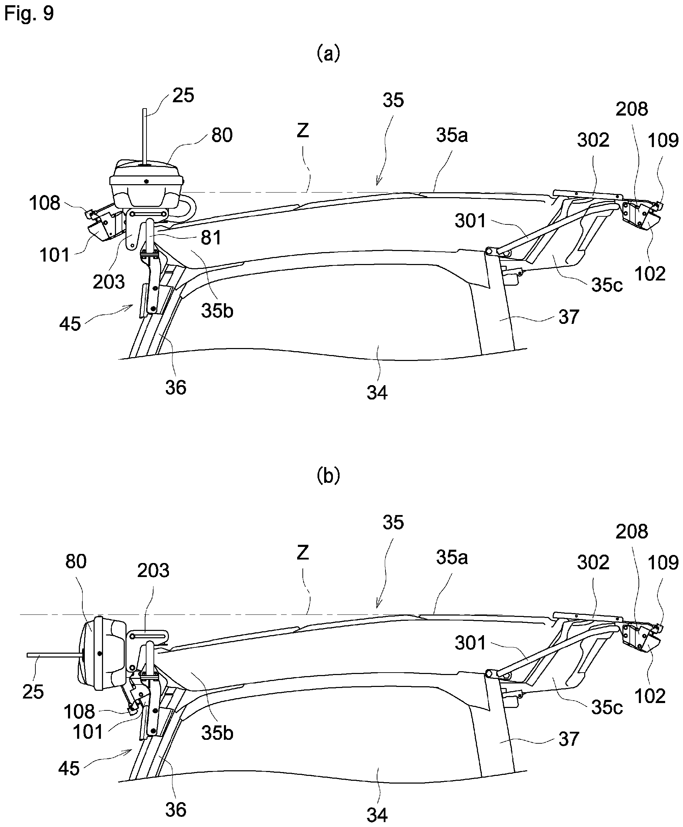

When the antenna unit 80 is attached in the use position, as illustrated in FIG. 9(a), part of the antenna unit 80 protrudes above a highest line Z passing through a highest portion 35a of the roof 35 so that the antenna of the communication module 25 may be located on a higher position and the wireless communication of the communication module 25 may be properly performed. On the other hand, when the antenna unit 80 is attached in the non-use position, as illustrated in FIG. 9(b), the upper end of the antenna unit 80 is located at the same level as that of the highest line Z or at a lower level than that of the highest line Z. Thus, when the tractor 1 is transported or the tractor 1 is stored in a storage location such as a shed, it is possible to prevent the interference with the antenna unit 80 or the occurrence of damages, or the like, to the antenna unit 80 due to the contact with an obstacle or the like, as the antenna unit 80 does not protrude above the highest line Z.

With regard to the attachment structure of the front lidar sensor 101 to the antenna unit 80, as illustrated in FIG. 7, the front lidar sensor 101 is attached to the bottom of the antenna unit 80 via a fourth attachment plate 204 and a fifth attachment plate 205 due to the fastening with the connector 50 such as a bolt and a nut. The fourth attachment plate 204 includes an attachment surface 204a extending in the right-and-left direction, and both end portions of the attachment surface 204a extend downward to form a bridge shape. The fifth attachment plate 205 includes a pair of right and left attachment surfaces 205a opposing to each other in the right-and-left direction, and the upper ends of the attachment surfaces 205a are connected to each other to form a bridge shape. The attachment surface 204a of the fourth attachment plate 204 is fixedly connected to the bottom of the antenna unit 80 with the connector 50. The front side portion of the fourth attachment plate 204 is fixedly connected to the rear side portion of the fifth attachment plate 205 with the connector 50. The right and left attachment surfaces 205a of the fifth attachment plate 205 in a pair are fixedly connected to both lateral sides of the front lidar sensor 101 with the connectors 50. The front lidar sensor 101 is attached in such a manner that it is sandwiched between the right and left attachment surfaces 205a of the fifth attachment plate 205 in the right-and-left direction.

As illustrated in FIG. 7, the front lidar sensor 101 is configured to be attachable to and detachable from the antenna unit 80 via the fourth attachment plate 204 and the fifth attachment plate 205. The front lidar sensor 101 may be additionally attached, or only the front lidar sensor 101 may be detached. Furthermore, as the antenna unit 80 is also configured to be attachable to and detachable from the mirror attachment unit 45 via the antenna-unit support stay 81, the front lidar sensor 101 alone may be attached to or detached from the traveling body 7, and the front lidar sensor 101 together with the antenna unit 80 may be attached to or detached from the traveling body 7. The front lidar sensor 101 uses, for example, the antenna-unit support stay 81 supporting the antenna unit 80 as a common support stay and, as is the case with the antenna unit 80, obtains the strong support while preventing the transmission of vibrations, and the like, to the front lidar sensor 101.

As the front lidar sensor 101 is integral with the antenna unit 80, the front lidar sensor 101 is also configured to flexibly change the position, i.e., the use position in which it faces to the front side of the traveling body 7 and is used to detect an obstacle in front of the traveling body 7 as illustrated in FIG. 6 and the non-use position in which it faces downward and is not used to detect an obstacle as illustrated in FIG. 8, due to a change in the position of the antenna unit 80 between the use position and the non-use position.

When the front lidar sensor 101 is in the use position, as illustrated in FIG. 6 and FIG. 9(a), the front lidar sensor 101 is disposed at a position higher than the boarding step 41 (see FIG. 1) serving as a boarding area for the cabin 10 (the driver's seat 39) in the vertical direction and at the position corresponding to the roof 35. The front lidar sensor 101 is attached in a forward and downward posture such that the front side portion is located on a lower side. The front lidar sensor 101 is provided so as to measure the front side of the traveling body 7 by looking down diagonally from above. As the antenna-unit support stay 81 is disposed at the position overlapped with a front end portion 35b of the roof 35 in the front-and-back direction of the traveling body 7 and at the position near the front end portion 35b of the roof 35 in the vertical direction, the front lidar sensor 101 is disposed at the nearby position on the forward and diagonally upward side of the front end portion 35b of the roof 35 through the use of the lower space of the antenna unit 80. Accordingly, as illustrated in FIG. 11, at least part of the front lidar sensor 101 is overlapped with the front end portion 35b of the roof 35 when viewed from a passenger T sitting on the driver's seat 39. The front lidar sensor 101 is disposed at such a position that at least part of the front lidar sensor 101 is concealed by the front end portion 35b of the roof 35. The front lidar sensor 101 is present at such a position that part of it falls outside a viewable range B1 on the front side of the passenger T sitting on the driver's seat 39 so that it is possible to prevent the view of the passenger T sitting on the driver's seat 39 from being blocked by the front lidar sensor 101.

When the front lidar sensor 101 is in the non-use position, as illustrated in FIG. 8 and FIG. 9(b), the upper end of the front lidar sensor 101 is located at a position lower than the highest line Z (see FIG. 9(b)) as is the case with the antenna unit 80. Thus, when the tractor 1 is transported or the tractor 1 is stored in a storage location such as a shed, the front lidar sensor 101 as well as the antenna unit 80 are prevented from protruding above the highest line Z.

Regarding the installation position of the front lidar sensor 101 with respect to the right-and-left direction of the traveling body 7, it is disposed at the central part of the antenna unit 80 in the right-and-left direction. As the antenna unit 80 is disposed at the position corresponding to the central portion of the cabin 10 in the right-and-left direction of the traveling body 7, the front lidar sensor 101 is also disposed at the position corresponding to the central portion of the cabin 10 in the right-and-left direction of the traveling body 7.

As illustrated in FIG. 6 and FIG. 7, in addition to the front lidar sensor 101, a front camera 108 whose imaging range is the front side of the traveling body 7 is attached to the fifth attachment plate 205 with a connector, or the like. The front camera 108 is located above the front lidar sensor 101. In the same manner as the front lidar sensor 101, the front camera 108 is attached in a forward and downward posture such that the front side portion is located on a lower side. The front camera 108 is provided so as to capture the front side of the traveling body 7 while looking down obliquely from above. The front camera 108 is configured to output a captured image, which is captured by the front camera 108, to an external unit. The image captured by the front camera 108 is displayed on a display device such as the display unit of the tractor 1 or the display unit 51 of the mobile communication terminal 3 so that the user, or the like, may visually recognize the situation in the surroundings of the tractor 1.

Next, the support structure of the rear lidar sensor 102 is described.

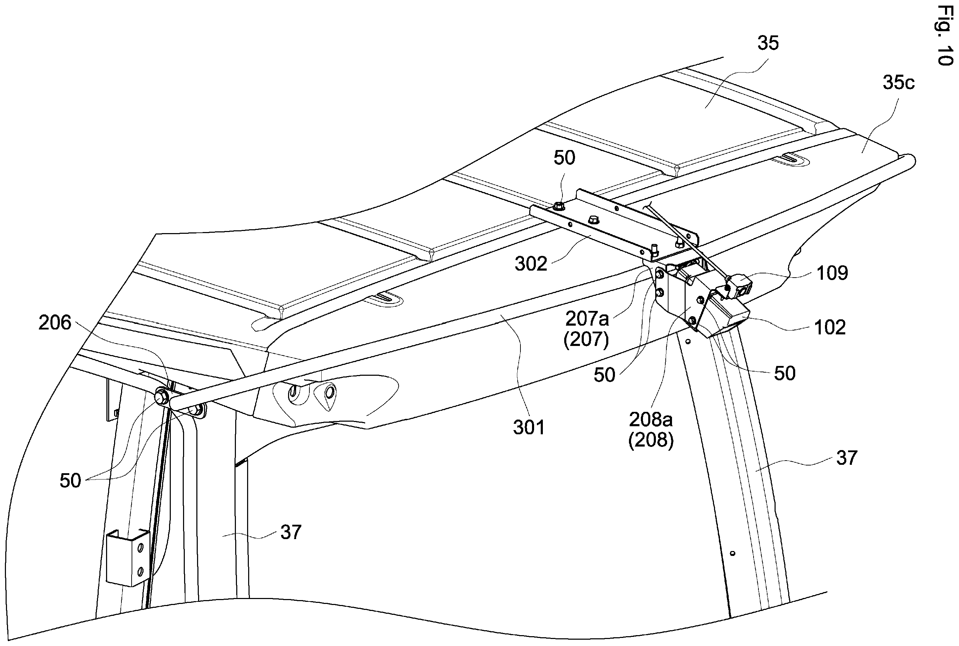

As illustrated in FIG. 5 and FIG. 10, the rear lidar sensor 102 is attached to a pipe-shaped sensor support stay 301 extending across the entire length of the cabin 10 in the right-and-left direction of the traveling body 7. The rear lidar sensor 102 is disposed at the position corresponding to the central portion of the cabin 10 in the right-and-left direction of the traveling body 7.

As illustrated in FIG. 5 and FIG. 10, the sensor support stay 301 is fixedly connected such that it extends across right and left rear pillars 37 provided on the right and left end portions of the cabin 10. The sensor support stay 301 is formed in a bridge shape whose right and left end portions are curved to the front diagonally in a plan view. The right and left end portions of the sensor support stay 301 are fixedly connected to attachment members provided on the right and left upper end portions of the rear pillars 37 via a sixth attachment plate 206. The right and left end portions of the sensor support stay 301 are fixedly connected to the sixth attachment plate 206 by welding, or the like. The sixth attachment plate 206 and the attachment member provided on the upper end portion of the rear pillar 37 are fastened with the connector 50 so that the sensor support stay 301 is fixedly connected in a horizontally extending posture.

With regard to the attachment structure of the rear lidar sensor 102 to the sensor support stay 301, as illustrated in FIG. 10, the rear lidar sensor 102 is attached to the sensor support stay 301 via a seventh attachment plate 207 and an eighth attachment plate 208. The seventh attachment plate 207 includes a pair of right and left side wall surfaces 207a opposed to each other in the right-and-left direction, and the upper end portions of the side wall surfaces 207a are connected to form a bridge shape. The eighth attachment plate 208 includes a pair of right and left attachment surfaces 208a that are opposed to each other in the right-and-left direction, and the upper end portions of the attachment surfaces 208a are connected to form a bridge shape. The lower edge of the side wall surface 207a of the seventh attachment plate 207 is fixedly connected to the sensor support stay 301 by welding, or the like. The rear side portion of the seventh attachment plate 207 is fixedly connected to the front side portion of the eighth attachment plate 208 with the connector 50. The right and left attachment surfaces 208a in a pair of the eighth attachment plate 208 are fixedly connected to both lateral sides of the rear lidar sensor 102 with the connector 50. The rear lidar sensor 102 is attached such that it is sandwiched between the right and left attachment surfaces 208a of the eighth attachment plate 208 in the right-and-left direction. A reinforcing plate 302 is fixedly connected to the front side portion of the seventh attachment plate 207 with a connector, or the like. The front side portion of the reinforcing plate 302 is fixedly connected to the upper surface of the roof 35 with the connector 50. The reinforcing plate 302 is provided such that it extends in the front-and-back direction with a U-shape having upstanding walls obtained by upwardly bending both side ends thereof with respect to the right-and-left direction and crosses from the roof 35 to the seventh attachment plate 207 and the sensor support stay 301.

As illustrated in FIG. 9(b) and FIG. 10, the rear lidar sensor 102 is disposed at a position higher than the boarding step 41 (see FIG. 1) in the vertical direction and at the position corresponding to the roof 35. The rear lidar sensor 102 is attached to the sensor support stay 301 in a backward and downward posture such that the rear side portion is located on a lower side. The rear lidar sensor 102 is provided so as to measure the rear side of the traveling body 7 by looking down diagonally from above. As the sensor support stay 301 is disposed at the position near a rear end portion 35c of the roof 35 in the front-and-back direction of the traveling body 7 and at the position overlapped with the rear end portion 35c of the roof 35 in the vertical direction, the rear lidar sensor 102 is disposed on substantially the same level as that of the rear end portion 35c of the roof 35 or at the nearby position on the backward and diagonally upward side. Accordingly, as illustrated in FIG. 11, at least part of the rear lidar sensor 102 is overlapped with the rear end portion 35c of the roof 35 when viewed from the passenger T sitting on the driver's seat 39. The rear lidar sensor 102 is disposed at such a position that at least part of the rear lidar sensor 102 is concealed by the rear end portion 35c of the roof 35. The rear lidar sensor 102 is present at such a position that part of it falls outside a viewable range B2 on the rear side of the passenger T sitting on the driver's seat 39 so that it is possible to prevent the view of the passenger T seating on the driver's seat 39 from being blocked by the rear lidar sensor 102.

As illustrated in FIG. 10, the rear lidar sensor 102 is configured to be attachable to and detachable from the rear pillar 37 via the sensor support stay 301, the seventh attachment plate 207, and the eighth attachment plate 208. The rear lidar sensor 102 may be additionally attached, or the rear lidar sensor 102 may be detached. The rear lidar sensor 102 is supported by the rear pillar 37 forming the cabin frame 31 via the sensor support stay 301 so as to be firmly supported while preventing the transmission of vibrations, and the like, to the rear lidar sensor 102.

As illustrated in FIG. 10, in addition to the rear lidar sensor 102, a rear camera 109 whose imaging range is the rear side of the traveling body 7 is attached to the eighth attachment plate 208 with a connector, or the like. The rear camera 109 is located above the rear lidar sensor 102. In the same manner as the rear lidar sensor 102, the rear camera 109 is attached in a backward and downward posture such that the rear side portion is located on a lower side. The rear camera 109 is provided so as to capture the rear side of the traveling body 7 while looking down obliquely from above. The rear camera 109 is configured to output a captured image, which is captured by the rear camera 109, to an external unit. The image captured by the rear camera 109 is displayed on a display device such as the display unit of the tractor 1 or the display unit 51 of the mobile communication terminal 3 so that the user, or the like, may visually recognize the situation in the surroundings of the tractor 1.

The measurement range C of the front lidar sensor 101 is described.

The front lidar sensor 101 has a right-and-left measurement range C1 in the right-and-left direction as illustrated in FIG. 12 and has a vertical measurement range C2 in the vertical direction as illustrated in FIG. 11. Thus, the top-to-bottom, right-to-left, and front-to-back four-sided pyramid measurement range C included in the right-and-left measurement range C1 and the vertical measurement range C2 within the range to the position away from itself by a first set distance X1 (see FIG. 12) is set for the front lidar sensor 101.

As illustrated in FIG. 12, the right-and-left measurement range C1 for the front lidar sensor 101 is a symmetric range with respect to the right-and-left direction of the traveling body 7 with the right-and-left center line of the traveling body 7 as the axis of symmetry. The right-and-left measurement range C1 is set to be a range with a first set angle α1 between a first boundary line E1 and a second boundary line E2 extending from the front lidar sensor 101. Although the front lidar sensor 101 thus has the right-and-left measurement range C1, the entire right-and-left measurement range C1 is not an obstacle detection range, and the center side of the right-and-left measurement range C1 is an obstacle detection range. In the right-and-left measurement range C1, a detection range J for the detection of an obstacle is set at the center side of the traveling body 7 in the right-and-left direction, and a non-detection range K for the non-detection of an obstacle is set outside the detection range J. Thus, the range in which the obstacle control unit 107 performs the obstacle detection process to detect an obstacle based on the measurement information of the front lidar sensor 101 is the detection range J in the right-and-left direction. The detection range J is set to be a range to the position away from the central part of the traveling body 7 as a reference to the right and left sides by a second set distance X2 with respect to the right-and-left direction of the traveling body 7. The detection range J is set to be a range larger than the width of the tractor 1 and the width of the work device 12 in the width direction of the traveling body 7. For the detection range J, the size of range may be changed as appropriate; for example, the second set distance X2 may be optionally changed to change the size of the detection range J.

As illustrated in FIG. 11, the vertical measurement range C2 for the front lidar sensor 101 is set to be a range with a second set angle α2 between a third boundary line E3 and a fourth boundary line E4 extending from the front lidar sensor 101. The third boundary line E3 is set to be a horizontal line extending to the front side from the front lidar sensor 101 in a horizontal direction, and the fourth boundary line E4 is set to be a straight line positioned below a first tangent line G1 from the front lidar sensor 101 to the front upper portion of the front wheel 5. The vertical measurement range C2 is set such that a first center line F1 between the third boundary line E3 and the fourth boundary line E4 is located above the hood 8 so as to ensure a sufficiently large measurement range above the hood 8. As the fourth boundary line E4 is set to be below the first tangent line G1, it is possible to measure the measurement target, such as an object or a person, even if the measurement target is present, for example, at the position near the front side end of the traveling body 7 (the front side end of the hood 8).

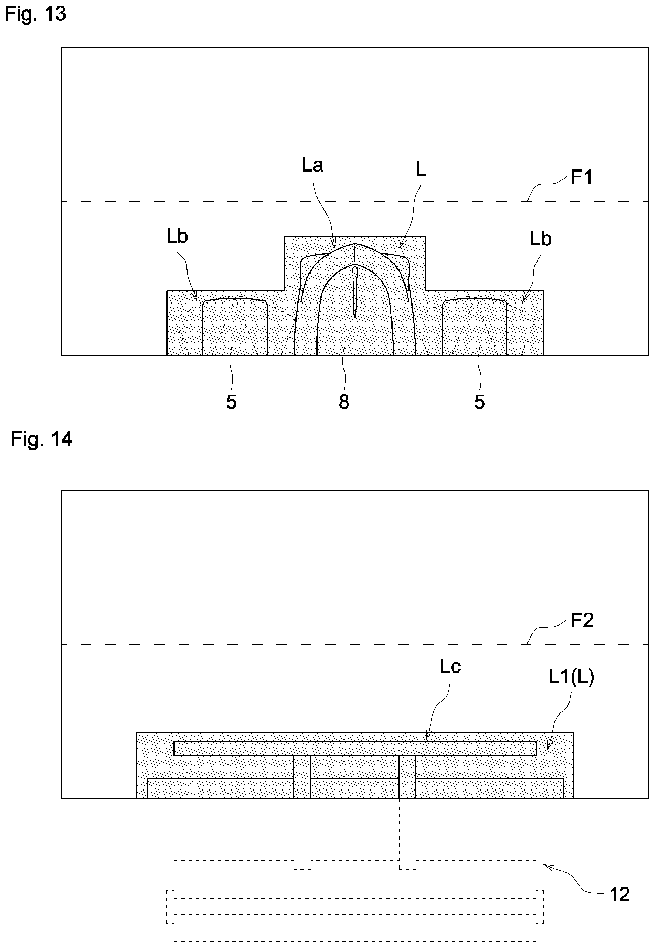

As illustrated in FIG. 11, as part of the hood 8 and part of the front wheel 5 fall within the vertical measurement range C2 of the front lidar sensor 101, there is a possibility that part of the hood 8 or part of the front wheel 5 is improperly detected as an obstacle when the obstacle control unit 107 performs the obstacle detection process based on the measurement information of the front lidar sensor 101. Therefore, a first masking process is performed to prevent the improper detection. For the first masking process, the range where part of the hood 8 and part of the front wheel 5 are present within the measurement range C of the front lidar sensor 101 is previously set as a masking range L (see FIG. 13) for which obstacle detection is not performed. The first masking process is described later.

In this way, the obstacle control unit 107 performs the obstacle detection process based on the measurement information of the front lidar sensor 101 to detect the presence or absence of an obstacle in the range that is included in the detection range J (see FIG. 12) in the right-and-left direction, is included in the vertical measurement range C2 (see FIG. 11) in the vertical direction, and excludes the masking range L.

The measurement range D of the rear lidar sensor 102 is described.

As is the case with the front lidar sensor 101, the rear lidar sensor 102 has a right-and-left measurement range D1 in the right-and-left direction as illustrated in FIG. 12 and a vertical measurement range D2 in the vertical direction as illustrated in FIG. 11. Thus, the top-to-bottom, right-to-left, and front-to-back four-sided pyramid measurement range D included in the right-and-left measurement range D1 and the vertical measurement range D2 within the range to the position away from itself by a third set distance X3 (see FIG. 12) is set for the rear lidar sensor 102. Further, X1 and X3 may be set to the identical distance or may be set to different distances.

As illustrated in FIG. 12, as is the case with the front lidar sensor 101, the right-and-left measurement range D1 of the rear lidar sensor 102 is set to be a range with a third set angle α3 between a fifth boundary line E5 and a sixth boundary line E6 extending from the rear lidar sensor 102. In the right-and-left measurement range D1, the detection range J is set at the center side of the traveling body 7 in the right-and-left direction, and the non-detection range K is set outside the detection range J. The range in which the obstacle control unit 107 performs the obstacle detection process to detect an obstacle based on the measurement information of the rear lidar sensor 102 is the detection range J in the right-and-left direction.

As illustrated in FIG. 11, the vertical measurement range D2 of the rear lidar sensor 102 is set to be a range with a fourth set angle α4 between a seventh boundary line E7 and an eighth boundary line E8 extending from the rear lidar sensor 102. As the work device 12 is provided so as to be lifted and lowered between a lifting position and a lowering position, the work device 12 located in the lowering position is illustrated in a solid line and the work device 12 located in the lifting position is illustrated in a dotted line in FIG. 11. The seventh boundary line E7 is set to be a horizontal line extending to the rear side from the rear lidar sensor 102 in a horizontal direction, and the eighth boundary line E8 is set to be a straight line positioned below a second tangent line G2 from the rear lidar sensor 102 to the rear upper portion of the work device 12 located in the lowering position. The vertical measurement range D2 is set such that a second center line F2 between the seventh boundary line E7 and the eighth boundary line E8 is located above the work device 12 (illustrated in a dotted line in FIG. 11) located in the lifting position so as to ensure a sufficiently large measurement range above the work device 12 in the lifting position. As the eighth boundary line E8 is set to be below the second tangent line G2, it is possible to measure the measurement target, such as an object or a person, even if the measurement target is present, for example, at the position near the rear side end of the work device 12 in the lowering position.

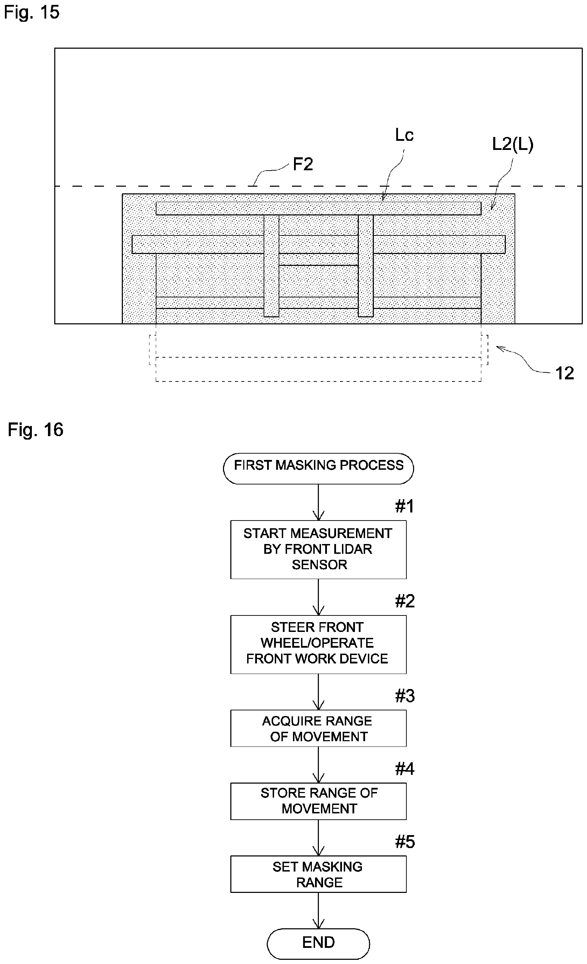

As part of the work device 12 falls within the vertical measurement range D2 of the rear lidar sensor 102, there is a possibility that part of the work device 12 is improperly detected as an obstacle when the obstacle control unit 107 performs the obstacle detection process based on the measurement information of the rear lidar sensor 102. Therefore, a second masking process is performed to prevent the improper detection. For the second masking process, the range where part of the work device 12 is present within the measurement range D of the rear lidar sensor 102 is previously set as the masking range L (see FIG. 14, FIG. 15) for which obstacle detection is not performed.

As illustrated in FIG. 11, the work device 12 is lowered and lifted between the lowering position and the lifting position (the position illustrated in a dotted line in the figure). The tractor 1 travels while performing predetermined work with the work device 12 lowered in the lowering position or simply travels without performing predetermined work with the work device 12 lifted in the lifting position. Therefore, for the second masking process, a masking range L1 for the lowering position illustrated in FIG. 14 and a masking range L2 for the lifting position illustrated in FIG. 15 are set as the masking ranges L. The second masking process is described later.

In this manner, the obstacle control unit 107 performs the obstacle detection process based on the measurement information of the rear lidar sensor 102 to detect the presence or absence of an obstacle in the range that is included in the detection range J (see FIG. 12) in the right-and-left direction, is included in the vertical measurement range D2 (see FIG. 11) in the vertical direction, and excludes the masking ranges L1, L2. The obstacle control unit 107 performs the obstacle detection process by using the masking range L1 for the lowering position when the work device 12 is located in the lowering position and performs the obstacle detection process by using the masking range L2 for the lifting position when the work device 12 is located in the lifting position.

The sonar units 103, 104 are described below.

The sonar units 103, 104 are configured to measure the distance to the measurement target based on the round-trip time during which a projected ultrasonic wave hits the measurement target and returns back.

The right sonar unit 103 whose measurement range is the right side of the tractor 1 (the travelling body 7) illustrated in FIG. 12 and the left sonar unit 104 whose measurement range is the left side of the tractor 1 (the travelling body 7) illustrated in FIG. 12 are provided as the sonar units 103, 104.

As illustrated in FIG. 12, a measurement range N of the right sonar unit 103 and the measurement range N of the left sonar unit 104 are different from each other only in that the directions extending from the traveling body 7 are opposite with respect to the right-and-left direction, and the measurement ranges N on the right and left sides are symmetrical.

The measurement target of the sonar units 103, 104 is the outer side of the traveling body 7. The sonar units 103, 104 are attached to the traveling body 7 so as to project ultrasonic waves downward by a predetermined angle with respect to the horizontal direction, and the measurement range N is set to extend from the sonar units 103, 104 downward by a predetermined angle. The measurement range N of the sonar units 103, 104 is a range with a radius that is the distance from the sonar units 103, 104 to the outer side of the traveling body 7 by a predetermined distance, and it is set between the right-and-left measurement range C1 of the front lidar sensor 101 and the right-and-left measurement range D1 of the rear lidar sensor 102 in the front-and-back direction of the traveling body 7.

As described above, the obstacle control unit 107 performs the obstacle detection process based on the measurement information of the sonar units 103, 104 to detect the presence or absence of an obstacle in the right and left measurement ranges N.

The collision avoidance control by the obstacle control unit 107 is described below; first, the collision avoidance control in the case of the detection of an obstacle during the obstacle detection process based on the measurement information of the lidar sensors 101, 102 is described, and then the collision avoidance control in the case of the detection of an obstacle during the obstacle detection process based on the measurement information of the sonar units 103, 104 is described.

Although the two lidar sensors, the front lidar sensor 101 and the rear lidar sensor 102, are provided as lidar sensors, the obstacle control unit 107 switches an obstacle detection state based on the switching between the forward and backward movements at the forward/backward movement switching points included in the target travel path P or based on the switching between the forward and backward movements using a forward/backward movement switching reverser lever provided in the cabin 10. The front lidar sensor 101 executes the measurement and the obstacle control unit 107 switches to a forward movement detection state so as to perform the obstacle detection process based on the measurement information of the front lidar sensor 101 when the tractor 1 travels forward, and the rear lidar sensor 102 executes the measurement and the obstacle control unit 107 switches to a backward movement detection state so as to perform the obstacle detection process based on the measurement information of the rear lidar sensor 102 when the tractor 1 travels backward. Thus, the lidar sensor to be used to detect an obstacle, either the front lidar sensor 101 or the rear lidar sensor 102, is switched depending on whether the tractor 1 is traveling forward or backward, whereby an obstacle is detected while a reduction in the processing load is achieved.

In the forward movement detection state, the obstacle control unit 107 performs the obstacle detection process based on the measurement information of the front lidar sensor 101 to detect the presence or absence of an obstacle in the range that is included in the detection range J (see FIG. 12) in the right-and-left direction, is included in the vertical measurement range C2 (see FIG. 11) in the vertical direction, and excludes the masking range L (see FIG. 13). In the backward movement detection state, when the work device 12 is located in the lowering position, the obstacle control unit 107 performs the obstacle detection process based on the measurement information of the rear lidar sensor 102 to detect the presence or absence of an obstacle in the range that is included in the detection range J (see FIG. 12) in the right-and-left direction, is included in the vertical measurement range D2 (see FIG. 11) in the vertical direction, and excludes the masking range L1 (see FIG. 14) for the lowering position. In the backward movement detection state, when the work device 12 is located in the lifting position, the obstacle control unit 107 performs the obstacle detection process based on the measurement information of the rear lidar sensor 102 to detect the presence or absence of an obstacle in the range that is included in the detection range J (see FIG. 12) in the right-and-left direction, is included in the vertical measurement range D2 (see FIG. 11) in the vertical direction, and excludes the masking range L2 (see FIG. 15) for the lifting position.

The setting is specified such that the control details of the collision avoidance control by the obstacle control unit 107 are different depending on in which range included in the detection range J an obstacle has been detected as illustrated in FIG. 12 when the front lidar sensor 101 or the rear lidar sensor 102 is used to detect the obstacle. Three ranges, a first detection range J1, a second detection range J2, and a third detection range J3, are set in the detection range J in accordance with the distance from the front lidar sensor 101 or the rear lidar sensor 102. The first detection range J1 is set in the range where the distance from the front lidar sensor 101 or the rear lidar sensor 102 is between a fourth set distance X4 and the first set distance X1 or between the fourth set distance X4 and the third set distance X3. The second detection range J2 is set in the range where the distance from the front lidar sensor 101 or the rear lidar sensor 102 is between a fifth set distance X5 and the fourth set distance X4. The third detection range J3 is set in the range where the distance from the front lidar sensor 101 or the rear lidar sensor 102 is the fifth set distance X5. Thus, the first detection range J1, the second detection range J2, and the third detection range J3 are set in descending order of distance for the tractor 1 including the front lidar sensor 101, the rear lidar sensor 102, and the work device 12.

The control details of the collision avoidance control in the case of the detection of an obstacle using the front lidar sensor 101 or the rear lidar sensor 102 are the same in the case of the tractor 1 traveling forward and in the case of the tractor 1 traveling backward; therefore, the case of the tractor 1 traveling forward is described below.

When the tractor 1 is traveling forward and an obstacle is detected within the first detection range J1 during the obstacle detection process as illustrated in FIG. 12, the obstacle control unit 107 performs, as the collision avoidance control, a first warning control to control a warning device 26, such as a warning buzzer and a warning lamp, so as to warn the presence of an obstacle in the first detection range J1. During the first warning control, for example, the obstacle control unit 107 controls the warning device 26 such that the warning buzzer intermittently operates at a predetermined frequency and the warning lamp lights up in a predetermined color.

When an obstacle is detected within the second detection range J2 during the obstacle detection process, the obstacle control unit 107 executes, as the collision avoidance control, a second warning control to control the warning device 26, such as a warning buzzer and a warning lamp, so as to warn the presence of an obstacle in the second detection range J2 and also executes a first deceleration control so as to reduce the vehicle speed of the tractor 1. During the second warning control, for example, the obstacle control unit 107 controls the warning device 26 such that the warning buzzer intermittently operates at a predetermined frequency and the warning lamp lights up in a predetermined color. During the first deceleration control, for example, the obstacle control unit 107 obtains the collision estimation time before the tractor 1 collides with the obstacle based on the current vehicle speed of the tractor 1, the distance to the obstacle, and the like. The obstacle control unit 107 controls the engine 9, the transmission device 13, the brake operation mechanism 15, and the like, so as to reduce the vehicle speed of the tractor 1 while the obtained collision estimation time is maintained at the set time (e.g., three seconds).

When an obstacle is detected within the third detection range J3 during the obstacle detection process, the obstacle control unit 107 executes, as the collision avoidance control, a third warning control to control the warning device 26, such as a warning buzzer and a warning lamp, so as to warn the presence of an obstacle in the third detection range J3 and also executes a stop control so as to stop the tractor 1. During the third warning control, for example, the obstacle control unit 107 controls the warning device 26 such that the warning buzzer continuously operates and the warning lamp lights up in a predetermined color. During the stop control, for example, the obstacle control unit 107 controls the brake operation mechanism 15, or the like, so as to stop the tractor 1.

Furthermore, the predetermined frequencies at which the warning buzzer intermittently operates during the first warning control and the second warning control may be the identical frequency or different frequencies. Further, the predetermined color in which the warning lamp lights up during the first to the third warning controls may be the identical color or different colors. During the first to the third warning controls, in addition to the control on the warning device 26 of the tractor 1, the obstacle control unit 107 may control the terminal electronic control unit 52 so as to cause the display unit 51 of the mobile communication terminal 3 to display the display content indicating that there is an obstacle in any of the first to the third detection ranges J1 to J3.

For example, when an obstacle is detected within the first detection range J1, the obstacle control unit 107 may execute the first warning control to warn the user, or the like, that there is an obstacle within the first detection range J1. When the tractor 1 continuously travels and the detection range of the obstacle approaches the second detection range J2 after the first detection range J1, the obstacle control unit 107 executes the first deceleration control as well as the second warning control to reduce the vehicle speed of the tractor 1 so as to avoid the collision between the tractor 1 and the obstacle. When the detection range of the obstacle approaches the third detection range J3 after the second detection range J2 in spite of a reduction in the speed of the tractor 1, the obstacle control unit 107 may execute the stop control in addition to the third warning control to stop the tractor 1 so as to properly avoid the collision between the tractor 1 and the obstacle.

When the lidar sensors 101, 102 are used, a movable measurement target such as a person is also detected as an obstacle. Therefore, even if an obstacle is detected within the detection range J, the obstacle itself may move and fall outside the detection range J. Thus, when the obstacle falls outside the first detection range J1, the obstacle control unit 107 terminates the first warning control. When the obstacle falls outside the second detection range J2, the obstacle control unit 107 terminates the second warning control and also executes the vehicle-speed recovery control to control the engine 9, the transmission device 13, and the like, so as to increase the vehicle speed of the tractor 1 up to the set vehicle speed. When the obstacle falls outside the third detection range J3, the obstacle control unit 107 terminates the third warning control while keeping the traveling stopped state of the tractor 1. In this case, the user, or the like, may give an instruction for the restart, or the like, of the automatic travel of the tractor 1 to restart the automatic travel of the tractor 1.

Next, the collision avoidance control in the case of the detection of an obstacle during the obstacle detection process based on the measurement information of the sonar units 103, 104 is described.

The right and left sonar units 103, 104 are provided and, when the tractor 1 travels forward and when the tractor 1 travels backward, the obstacle control unit 107 performs an obstacle detection process based on the entire measurement information of the sonar units 103, 104 on both the right and left sides.

When an obstacle is detected during the obstacle detection process based on the measurement information of the sonar units 103, 104, the obstacle control unit 107 executes, as the collision avoidance control, a fourth warning control to control the warning device 26, such as a warning buzzer and a warning lamp, to warn the presence of an obstacle within the measurement range N of any of the sonar units 103, 104 and also executes a second deceleration control to reduce the vehicle speed of the tractor 1. During the fourth warning control, for example, the obstacle control unit 107 controls the warning device 26 such that the warning buzzer intermittently operates at a predetermined frequency and the warning lamp lights up in a predetermined color. During the second deceleration control, for example, the obstacle control unit 107 controls the engine 9, the transmission device 13, the brake operation mechanism 15, and the like, so as to reduce the vehicle speed of the tractor 1 to the set vehicle speed.

In this manner, the obstacle detection system 100 may use the front lidar sensor 101 and the rear lidar sensor 102 to detect the presence or absence of an obstacle on the front side and on the rear side of the traveling body 7 and use the sonar units 103, 104 to detect the presence or absence of an obstacle on the right and left of the traveling body 7. In the obstacle detection system 100, when the presence of an obstacle is detected, the obstacle control unit 107 may execute the collision avoidance control to warn the user, or the like, of the presence of the obstacle and prompt the user, or the like, to avoid the collision with the obstacle and, even if there is a possibility of the collision between the tractor 1 and the obstacle, reduce the speed of the tractor 1 or stop it to properly avoid the collision between the tractor 1 and the obstacle.

In the automatic travel state, the vehicle-mounted electronic control unit 18 executes the automatic travel control; therefore, the obstacle detection system 100 may cause the tractor 1 to automatically travel while reducing the speed of the tractor 1 or stopping it to avoid the collision with an obstacle. In the manual travel state, too, the obstacle detection system 100 may warn the driving user, or the like, of the presence of an obstacle and support the driving to avoid the collision between the tractor 1 and an obstacle.

The first masking process and the second masking process are further described below.

First, the masking range L (see FIG. 13 to FIG. 15) is described; the masking range L is a range for limiting the execution of the collision avoidance control by the obstacle control unit 107 without detecting an obstacle. In the masking range L, although the lidar sensors 101, 102 measure a certain measurement target, the obstacle control unit 107 refrains from detecting the measurement target as an obstacle during the obstacle detection process.

As illustrated in FIG. 11, when the part of the hood 8 and the parts of the front wheels 5 are present within the measurement range C of the front lidar sensor 101, the first masking process is performed to set the masking range L (see FIG. 13) so as to prevent the obstacle control unit 107 from improperly detecting the part of the hood 8 and the part of the front wheel 5 as obstacles and prevent the collision avoidance control from being executed due to the improper detection. Furthermore, as illustrated in FIG. 12, when the part of the work device 12 is present within the measurement range D of the rear lidar sensor 102, the second masking process is performed to set the masking range L (see FIG. 14 and FIG. 15) so as to prevent the obstacle control unit 107 from improperly detecting the part of the work device 12 as an obstacle and prevent the collision avoidance control from being executed due to the improper detection.

For example, during the first masking process and the second masking process, the actual measurement using the lidar sensors 101, 102 is performed as the preprocessing to use the lidar sensors 101, 102, and the masking range L (see FIG. 13 to FIG. 15) is set while a three-dimensional image generated from the measurement information at that time is displayed on a display device such as the display unit of the tractor 1 or the display unit 51 of the mobile communication terminal 3.

As illustrated in FIG. 11, the part of the hood 8 and the part of the front wheel 5 fall within the measurement range C of the front lidar sensor 101. While the hood 8 is present at a certain position, the front wheel 5 is a movable part as the front wheel 5 is steered to right and left due to the operation by the steering wheel 38, the power steering mechanism 14, etc. Therefore, during the first masking process, the masking range L needs to be set in accordance with the range of movement of the front wheel 5.

The part of the work device 12 falls within the measurement range D of the rear lidar sensor 102. As illustrated in FIG. 11, the work device 12 is a movable part as the work device 12 is lowered and lifted between the lowering position and the lifting position (the position indicated in a dotted line in the figure). Therefore, in the second masking process, the masking range L needs to be set in accordance with the range of movement of the work device 12.

Therefore, in order to set the masking range L in accordance with the range of movement of the movable part during the first masking process and the second masking process, as illustrated in FIG. 2, the tractor 1 includes a range-of-movement acquisition unit 110 and a masking range setting unit 111 in addition to the lidar sensors 101, 102 and the obstacle control unit 107. The range-of-movement acquisition unit 110 acquires the range of movement of the front wheel 5 and the work device 12 during the actual movement. The masking range setting unit 111 sets the masking range L in accordance with the range of movement acquired by the range-of-movement acquisition unit 110.

The flow of operations in the first masking process is described based on the flowchart illustrated in FIG. 16.

In the first masking process, first, the measurement by the front lidar sensor 101 is started so that a three-dimensional image is generated from the measurement result of the front lidar sensor 101 and, as illustrated in FIG. 13, the generated three-dimensional image is displayed on the display device such as the display unit of the tractor 1 or the display unit 51 of the mobile communication terminal 3 (Step #1).

The user, or the like, operates the steering wheel 38, or the like, to steer the front wheel 5, which is a movable part, to right and left. Accordingly, the range-of-movement acquisition unit 110 acquires the range of movement (the steering position on the right side and the steering position on the left side) during the actual steering of the front wheel 5 to right and left based on the measurement information of the front lidar sensor 101 (Steps #2, #3). Here, as illustrated in a dotted line in FIG. 13, the display device such as the display unit of the tractor 1 or the display unit 51 of the mobile communication terminal 3 displays the three-dimensional image including the range of movement of the front wheel 5 acquired by the range-of-movement acquisition unit 110.

The range-of-movement acquisition unit 110 stores the acquired range of movement of the front wheel 5 in the vehicle-mounted storage unit 185 (corresponding to a storage unit) (Step #4). As illustrated in FIG. 13, the masking range setting unit 111 sets the masking range L in accordance with the range of movement of the front wheel 5 acquired by the range-of-movement acquisition unit 110 (Step #5). Here, the masking range L is set to be a range in three dimensions, in the front-and-back direction, the right-and-left direction, and the vertical direction.

As illustrated in FIG. 13, the masking range setting unit 111 sets, as the masking range L, the mountain-shaped range larger than the reference range including a range La where the part of the hood 8 is present and a range Lb of movement of the front wheel 5 by a specified range. For example, the masking range L may be set to have the shape corresponding to the shapes of the hood 8 and the front wheels 5 so as to exclusively include the range La where the part of the hood 8 is present and the ranges Lb of movement of the front wheels 5, and the range and the shape of the masking range L may be changed as appropriate.

When the masking range setting unit 111 sets the masking range L, the masking range setting unit 111 may set the range specified by the user, or the like, on the display device as the masking range L as the display device presents the three-dimensional image. As the display device presents the three-dimensional image including the range La in which the part of the hood 8 is present and the ranges Lb of movement of the front wheels 5, the user, or the like, may easily designate the range including the range La where the part of the hood 8 is present and the ranges Lb of movement of the front wheels 5.

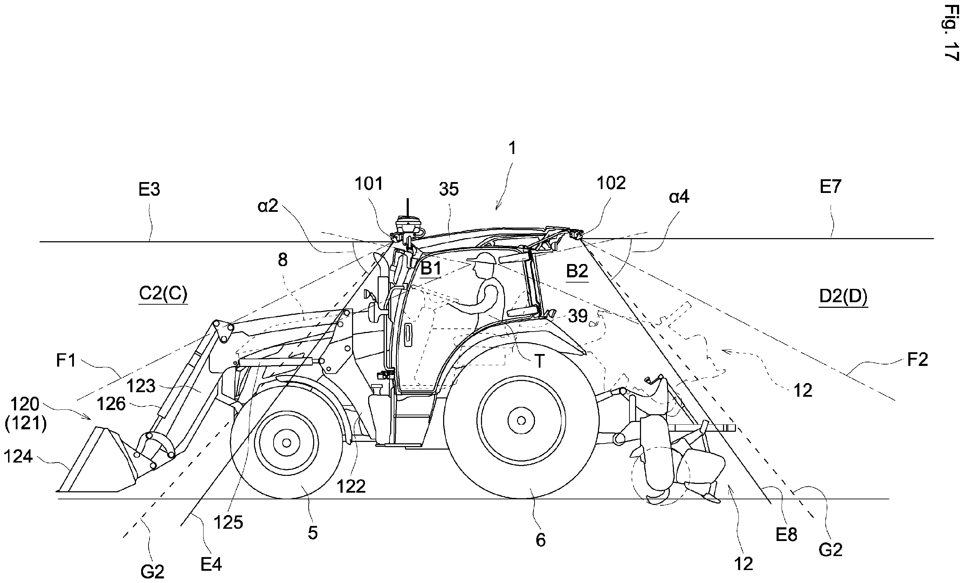

Here, as illustrated in FIG. 17, as a front work device 120, a front loader 121, or the like, may be coupled to the front part of the traveling body 7. The front loader 121 includes: a loader frame 122 coupled to the traveling body 7; right and left booms 123 that are coupled to the loader frame 122 so as to swing vertically; a bucket 124 that is coupled to the free ends of the booms 123 so as to swing vertically; right and left first hydraulic cylinders 125 that vertically drive and swing the right and left booms 123 with respect to the loader frame 122; and right and left second hydraulic cylinders 126 that vertically drive and swing the bucket 124 with respect to the right and left booms 123. The front loader 121 includes a loader control unit that controls the oil flow for the hydraulic cylinders 125, 126 in response to a manual operation of a loader operation lever provided in the cabin 10, or an automatic control command from the vehicle-mounted electronic control unit 18, or the like.

In the case illustrated in FIG. 17, part of the front work device 120 (the front loader 121) falls within the measurement range C of the front lidar sensor 101, and the front work device 120 is a movable part. During the first masking process, the masking range L needs to be set in accordance with the range of movement of the front work device 120 as well as the front wheels 5.

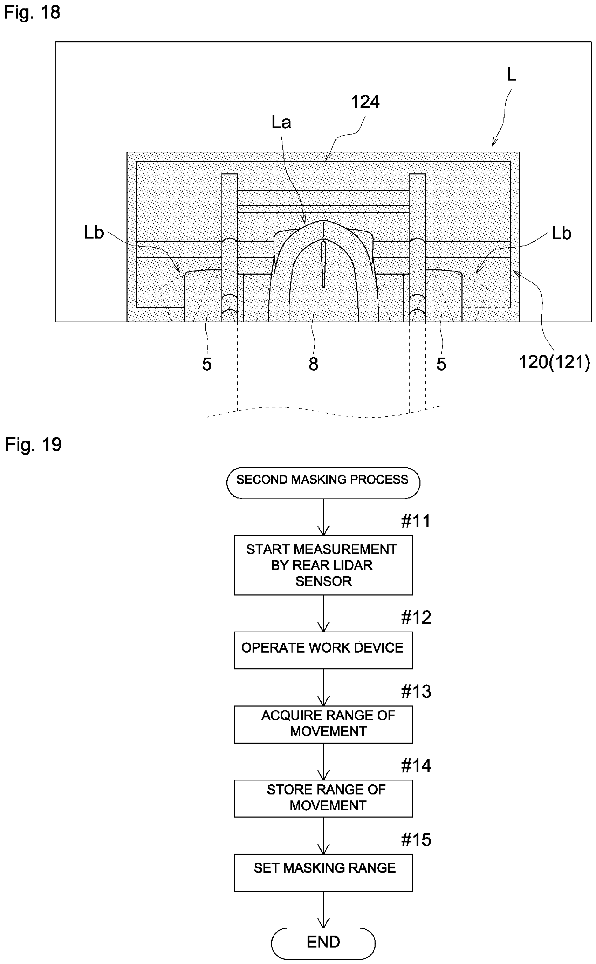

Therefore, during the first masking process, at Step #2 in FIG. 16, the front work device 120 (the front loader 121) is operated in addition to the steering of the front wheel 5. To operate the front work device 120, the front work device 120 is operated so as to actually perform scooping work or dumping work. Accordingly, based on the measurement information of the front lidar sensor 101, the range-of-movement acquisition unit 110 acquires not only the range of movement of the front wheel 5 during the actual steering to right and left but also the range of movement of the front work device 120 during the actual operation as illustrated in FIG. 18 (Step #3). FIG. 18 illustrates the three-dimensional image generated from the measurement information of the front lidar sensor 101 in a state where the front work device 120 (the front loader 121) is located at the lowering position for scooping work.

The range-of-movement acquisition unit 110 stores the acquired range of movement of the front wheels 5 and the front work device 120 in the vehicle-mounted storage unit 185 (Step #4). As illustrated in FIG. 18, the masking range setting unit 111 sets the masking range L in accordance with the range of movement of the front wheel 5 and the front work device 120 acquired by the range-of-movement acquisition unit 110 (Step #5). As illustrated in FIG. 18, the masking range L corresponding to the lowering position for scooping work is set; however, as the range-of-movement acquisition unit 110 has also acquired the range of movement at a position other than the lowering position, such as the lifting position for the movement of the front work device 120 when scooping work or dumping work is performed, and therefore the masking range L corresponding to the lifting position, or the like, may be set.

Furthermore, in the work device 12 (a work device such as a boom sprayer) coupled to the rear portion of the traveling body 7, part of the work device 12 may fall within the measurement range C of the front lidar sensor 101. In this case, as is the case with the front work device 120, the range-of-movement acquisition unit 110 acquires the range of movement of the work device 12 during an operation and stores the range of movement in the vehicle-mounted storage unit 185. The masking range setting unit 111 sets the masking range L in accordance with the range of movement of the work device 12 acquired by the range-of-movement acquisition unit 110.

The flow of operations in the second masking process is described based on the flowchart illustrated in FIG. 19.

In the second masking process, first, the measurement by the rear lidar sensor 102 is started so that a three-dimensional image is generated from the measurement result of the rear lidar sensor 102 and, as illustrated in FIG. 14 and FIG. 15, the generated three-dimensional image is displayed on the display device such as the display unit of the tractor 1 or the display unit 51 of the mobile communication terminal 3 (Step #11).

The work device 12 is operated such that work is actually performed by using the work device 12 (Step #12). In some types of the work device 12, a hydraulic device in the work device 12 is hydraulically operated or the tractor 1 travels and circles so as to move the work device 12 in the vertical direction and the horizontal direction of the traveling body 7 as well as lifting or lowering the work device 12, and therefore the work device 12 is operated in accordance with the actual work situation. Thus, the range-of-movement acquisition unit 110 acquires the range of movement of the work device 12 during the operation in accordance with the actual work based on the measurement information of the rear lidar sensor 102 (Step #13).

FIG. 14 and FIG. 15 illustrate a case where a rotary tiller is used as the work device 12. FIG. 14 illustrates a three-dimensional image when the work device 12 has been lowered to the lowering position, and FIG. 15 illustrates a three-dimensional image when the work device 12 has been lifted to the lifting position. In FIG. 14 and FIG. 15, the part of the work device 12 present within the measurement range D of the rear lidar sensor 102 is illustrated in a solid line, and the part present outside the measurement range D of the rear lidar sensor 102 is illustrated in a dotted line. Therefore, the position where the work device 12 is present in FIG. 14 corresponds to the lower limit position of the work device 12 in the lifting/lowering range, and the position where the work device 12 is present in FIG. 15 corresponds to the upper limit position of the work device 12 in the lifting/lowering range.

The range-of-movement acquisition unit 110 stores the acquired range of movement of the work device 12 in the vehicle-mounted storage unit 185 (Step #14). The masking range setting unit 111 sets the masking range L in accordance with the range of movement of the work device 12 acquired by the range-of-movement acquisition unit 110 as illustrated in FIG. 14 and FIG. 15 (Step #15). Furthermore, the masking range L is set to be a three-dimensional range in the front-to-back direction, the right-to-left direction, and the vertical direction.

As described above, the tractor 1 travels while performing predetermined work with the work device 12 lowered at the lowering position or simply travels without performing predetermined work with the work device 12 lifted at the lifting position. Therefore, in the second masking process, the masking range setting unit 111 sets, as the masking range L, the masking range L1 for the lowering position as illustrated in FIG. 14 and the masking range L2 for the lifting position as illustrated in FIG. 15. Thus, the masking range setting unit 111 variably sets the masking range L between the masking range L1 for the lowering position and the masking range L2 for the lifting position in accordance with the position of the work device 12 in the range of movement.

The masking range L is not limited to the masking range L1 for the lowering position and the masking range L2 for the lifting position and, for example, a lifting/lowering masking range corresponding to the work device 12 being lifted/lowered may be set. Here, the lifting/lowering masking range may be set to be a range including the entire lifting/lowering range of the work device 12. Furthermore, while the work device 12 is being lifted/lowered, the obstacle control unit 107 performs an obstacle detection process by using the lifting/lowering masking range. For example, when the work device 12 may be lifted or lowered and also moved in the right-and-left direction of the traveling body 7, a right masking range and a left masking range may be variably set in addition to the masking range L1 for the lowering position and the masking range L2 for the lifting position. Thus, with regard to the masking range L, the masking range setting unit 111 variably sets the masking range L in accordance with the moving state of the work device 12.

As illustrated in FIG. 14 and FIG. 15, a rectangular range larger than the reference range including a range Lc of movement (the lower limit position or the upper limit position in the lifting/lowering range) of the work device 12 by a specified range is set as the masking ranges L1, L2. For example, the masking range L may be set to have the shape corresponding to the shape of the work device 12 so as to exclusively include the range Lc of movement of the work device 12, and the range and the shape of the masking ranges L1, L2 may be changed as appropriate.

Furthermore, as is the case with the first masking process, when the masking range setting unit 111 sets the masking range L, the display device displays a three-dimensional image, and therefore the masking range setting unit 111 may set the range designated by the user, or the like, on the display device as the masking range L.

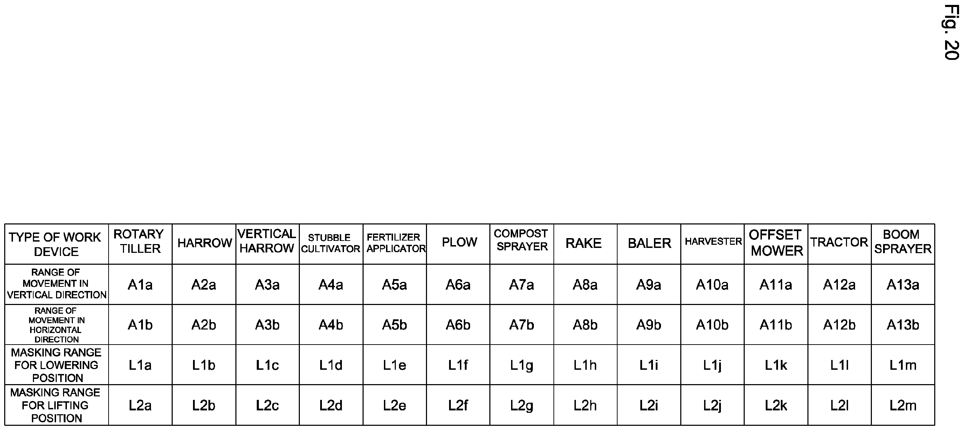

With regard to the work device 12, the multiple types of the work devices 12, such as a harrow, a vertical harrow, a stubble cultivator, a fertilizer applicator, a plow, a compost sprayer, a rake, a baler, a harvester, an offset mower, a tractor, or a boom sprayer, as well as a rotary tiller may be coupled to the three-point link mechanism 11. Some of the work devices 12 are disproportionately present on one side in the width direction of the traveling body 7, and others are extendable and contractable in the width direction of the traveling body 7 due to the swing around the center axis extending in the vertical direction or a slide movement in the width direction of the traveling body 7. Therefore, for the second masking process, when the range of movement of the work device 12 acquired by the range-of-movement acquisition unit 110 is stored in the vehicle-mounted storage unit 185, the type/range-of-movement information is stored, in which the type of the work device 12 is associated with the range of movement of the work device 12 acquired by the range-of-movement acquisition unit 110, as illustrated in FIG. 20. Regarding the range of movement of the work device 12, the range of movement in the vertical direction and the range of movement in the horizontal direction are separately stored. Furthermore, if the work device 12 is the type of the work device 12 that does not move in the vertical direction during an operation, the range of movement in the vertical direction is the range where the work device 12 is present. Similarly, if the work device 12 is the type of the work device 12 that does not move in the horizontal direction during an operation, the range of movement in the horizontal direction is the range where the work device 12 is present.

As illustrated in FIG. 20, the type/range-of-movement information is the information including not only the information associating the type of the work device 12 with the range of movement but also the information associating the type of the work device 12 with the masking range for the lowering position and the masking range for the lifting position. As illustrated in FIG. 20, the vehicle-mounted storage unit 185 stores, as the type/range-of-movement information, the information about the range of movement of the work device 12, the masking range for the lowering position, and the masking range for the lifting position separately for each type of the work device 12. For example, when the type of the work device 12 is a harrow, the range of movement of the harrow in the vertical direction during the actual operation is A2a, the range of movement in the horizontal direction is A2b, the masking range for the lowering position is set to L1b, and the masking range for the lifting position is set to L2b.

As the vehicle-mounted storage unit 185 (corresponding to a storage unit) stores the type/range-of-movement information illustrated in FIG. 20, the masking range setting unit 111 may set the masking range L by using the type/range-of-movement information stored in the vehicle-mounted storage unit 185 without performing the second masking process as long as the work device 12 is the type stored in the type/range-of-movement information. When the type of the work device 12 actually coupled to the rear portion of the traveling body 7 is input, the masking range setting unit 111 determines the range of movement of the work device 12 corresponding to the input type from the type/range-of-movement information illustrated in FIG. 20 in accordance with the input type and sets the masking range L in accordance with the determined range of movement of the work device 12. Thus, the masking range setting unit 111 may set the masking range L in accordance with the type of the work device 12 actually coupled to the tractor 1 and the type/range-of-movement information stored in the vehicle-mounted storage unit 185.

For example, when the type of the work device 12 is a harrow, the masking range setting unit 111 determines that the range of movement in the vertical direction is A2a and the range of movement in the horizontal direction is A2b, sets the masking range for the lowering position to L1b, and sets the masking range for the lifting position to L2b, as illustrated in FIG. 20. With regard to the input of the type of the work device 12, when the travel path generation unit 53 generates the target travel path P (see FIG. 3) as described above, the vehicle body data such as the type of the work device 12 is input. Therefore, when the user, or the like, simply inputs the vehicle body data, the masking range setting unit 111 may acquire the type of the work device 12 and set the masking range L by using the type/range-of-movement information stored in the vehicle-mounted storage unit 185.

During the second masking process, the work device 12 is actually moved so that the range-of-movement acquisition unit 110 acquires the range of movement of the work device 12 during the actual movement; however, the range-of-movement acquisition unit 110 may also perform a third masking process to acquire the range of movement of the work device 12 without actually moving the work device 12.

The third masking process is described.

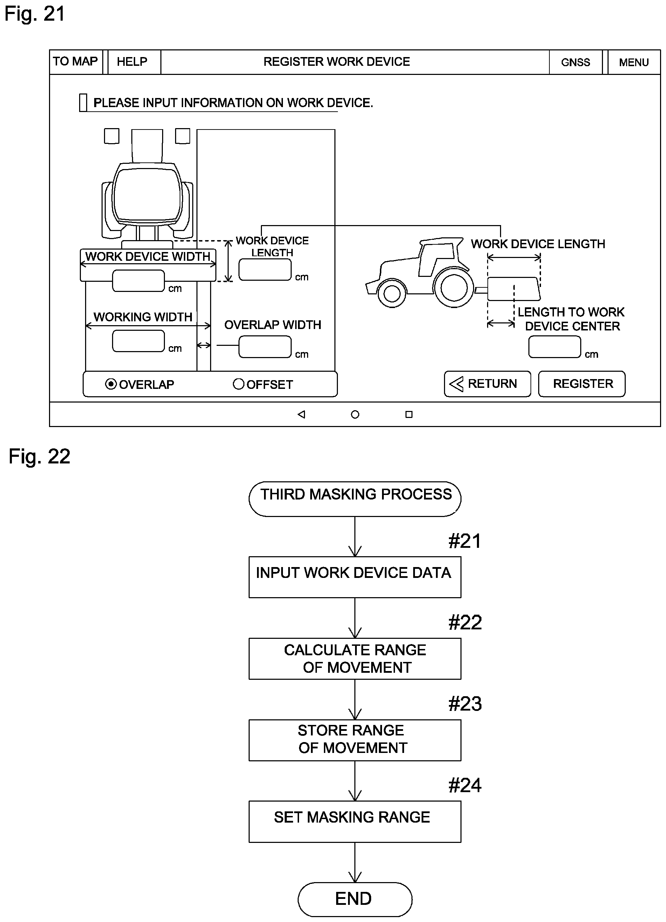

As described above, when the target travel path P (see FIG. 3) is generated, the user, or the like, inputs the vehicle body data such as the type or the model of the work vehicle or the work device 12 in accordance with the input guidance for target travel path setting displayed on the display unit 51 of the mobile communication terminal 3. The vehicle body data includes not only the type of the work device 12 but also the work device data on the work device 12, such as the work device width of the work device 12, the length of the work device 12, the length of the work device 12 from the front end to the center, or the height of the work device 12, as illustrated in FIG. 21. FIG. 21 is an example of an input screen for the work device data, and the user, or the like, inputs the work device width of the work device 12, the length of the work device 12, the length of the work device 12 from the front end to the center, the height of the work device 12, and the like, in accordance with the input screen.

Therefore, as in the flowchart illustrated in FIG. 22, in the third masking process, when the user, or the like, inputs the work device data including the work device width of the work device 12, the length of the work device 12, or the like, the range-of-movement acquisition unit 110 calculates the range of movement of the work device 12 from the work device data (Steps #21, 22). As illustrated in FIG. 1, the work device 12 is coupled to the three-point link mechanism 11 at the rear portion of the traveling body 7, and the installation position of the three-point link mechanism 11 in the tractor 1 and the lifting/lowering range of the three-point link mechanism 11 have specified values. Accordingly, the range-of-movement acquisition unit 110 uses the input work device data and the specified value of the installation position of the three-point link mechanism 11 in the tractor 1, and the like, to calculate the range of movement of the work device 12.

In the third masking process, after the range-of-movement acquisition unit 110 calculates the range of movement of the work device 12, the vehicle-mounted storage unit 185 stores the calculated range of movement of the work device 12 (Step #23). The masking range setting unit 111 sets the masking range L in accordance with the range of movement of the work device 12 calculated by the range-of-movement acquisition unit 110 (Step #24).

In the third masking process, as is the case with the second masking process, the vehicle-mounted storage unit 185 may store the type/range-of-movement information (see FIG. 20) associating the type of the work device 12 with the calculated range of movement. As illustrated in FIG. 20, the vehicle-mounted storage unit 185 may store the type/range-of-movement information about the multiple types of the work devices 12. In this case, when the user, or the like, inputs the work device data (see FIG. 21) on each of the multiple types of the work devices 12, the range-of-movement acquisition unit 110 may calculate the range of movement of each of the multiple types of the work devices 12 from the work device data on each of the multiple types of the work devices 12. Therefore, the range-of-movement acquisition unit 110 generates the type/range-of-movement information associating the type of the work device 12 with the calculated range of movement of each of the multiple types of the work devices 12, and the vehicle-mounted storage unit 185 stores the generated type/range-of-movement information.

As the vehicle-mounted storage unit 185 thus stores the type/range-of-movement information, the masking range setting unit 111 may set the masking range L in accordance with the type of the work device 12 actually coupled to the tractor 1 and the type/range-of-movement information stored in the vehicle-mounted storage unit 185 as long as the work device 12 is the type stored in the type/range-of-movement information, as described above.

When there are both the range of movement of the work device 12 acquired during the second masking process and the range of movement of the work device 12 acquired during the third masking process, the range of movement of the work device 12 acquired during the second masking process is stored with priority in the vehicle-mounted storage unit 185 as the range of movement of the work device 12 during the actual movement is acquired during the second masking process.

As described above, as the vehicle-mounted storage unit 185 stores the type/range-of-movement information (see FIG. 20), the vehicle-mounted electronic control unit 18 may use the type/range-of-movement information stored in the vehicle-mounted storage unit 185 to determine whether the range of movement of the work device 12 falls outside the supposed range of movement. For example, when some abnormality such as a failure of the work device 12 occurs, the range of movement of the work device 12 may fall outside the supposed range of movement, and the occurrence of such an abnormality may be determined.

In the automatic travel state or the manual travel state, predetermined work is performed with the work device 12 lifted or lowered. Here, the vehicle-mounted electronic control unit 18 may acquire the range of movement of the work device 12 from the measurement result of the rear lidar sensor 102. Therefore, the vehicle-mounted electronic control unit 18 compares the acquired range of movement of the work device 12 with the type/range-of-movement information stored in the vehicle-mounted storage unit 185 to determine whether the range of movement of the work device 12 falls outside the supposed range of movement. When the range of movement of the work device 12 falls outside the supposed range of movement, the vehicle-mounted electronic control unit 18 operates the warning device 26 to notify the user, or the like, that an abnormality has occurred in the work device 12, or the like.

As illustrated in FIG. 2, the tractor 1 includes an external output unit 112 that may output the type/range-of-movement information stored in the vehicle-mounted storage unit 185 to an external unit. The external output unit 112 outputs the type/range-of-movement information to an external management device, or the like, through the communication with an external unit using the communication module 25. The external management device may use the type/range-of-movement information output from the external output unit 112 to set the masking range L for the different tractor 1.

The communication between the external management device and the different tractor 1 allows the different tractor 1 to acquire the type/range-of-movement information. Thus, the different tractor 1 may use the acquired type/range-of-movement information and perform the above-described second masking process to set the masking range L. In the second masking process for this case, the operations at Steps #11 to 14 in FIG. 19 may be omitted and the operation at Step #15 may be exclusively performed as the type/range-of-movement information has been already acquired; thus, the masking range setting unit 111 sets the masking range L in accordance with the already acquired type/range-of-movement information without actually moving the work device 12.

As described above, the type/range-of-movement information acquired by the single tractor 1 is used as the shared information that is shared by the multiple tractors 1 so that it is possible to facilitate the setting of the masking range L for the tractors 1 using the shared information. The external output unit 112 may directly output the type/range-of-movement information to the different tractor 1 through the communication between the tractors 1, as well as outputting the type/range-of-movement information to the external management device.

### [Second Embodiment]

A second embodiment is described below; the same component as that in the first embodiment is for example denoted by the same reference numeral with the description thereof omitted, and a component different from that in the first embodiment is primarily described.

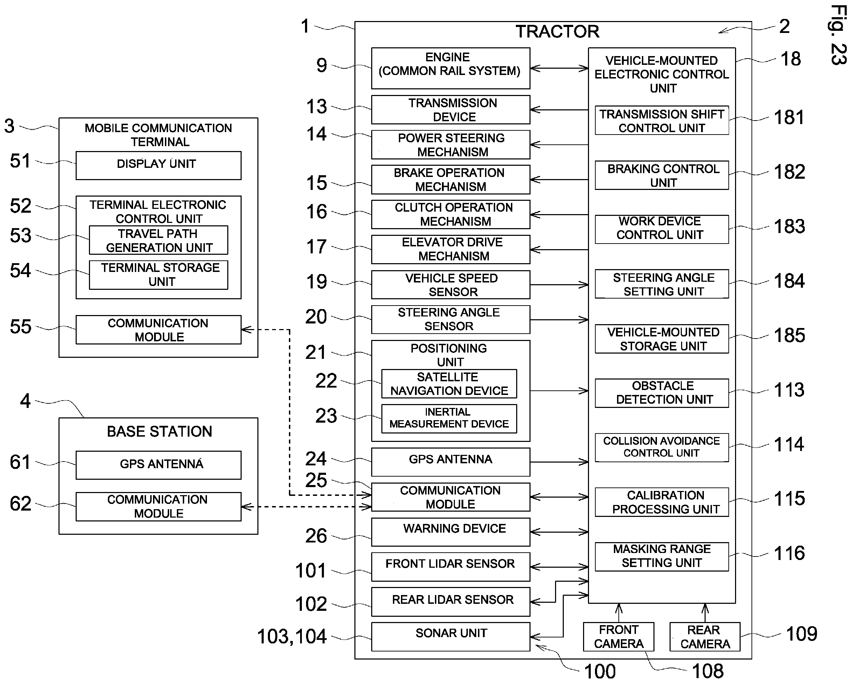

As illustrated in FIG. 1 and FIG. 23, the tractor 1 includes the obstacle detection system 100 that detects an obstacle around the tractor 1 (the traveling body 7) to avoid a collision with the obstacle. The obstacle detection system 100 includes: the lidar sensors (corresponding to distance sensors) 101, 102 that may measure the distance to the measurement target in three dimensions using a laser; the sonar units 103, 104 including the sonars that may measure the distance to the measurement target using ultrasonic waves; an obstacle detection unit 113; and a collision avoidance control unit 114. Here, the measurement target measured by the lidar sensors 101, 102 and the sonar units 103, 104 is an object, a person, etc.

The obstacle detection unit 113 is configured to perform an obstacle detection process to detect the measurement target, such as an object or a person, within a predetermined distance as an obstacle based on the measurement information of the lidar sensors 101, 102 and the sonar units 103, 104. The collision avoidance control unit 114 is configured to execute a collision avoidance control when the obstacle detection unit 113 detects an obstacle. The obstacle detection unit 113 repeatedly performs the obstacle detection process in real time based on the measurement information of the lidar sensors 101, 102 and the sonar units 103, 104 to properly detect an obstacle such as an object or a person, and the collision avoidance control unit 114 executes the collision avoidance control to avoid the collision with the obstacle that is detected in real time.

The vehicle-mounted electronic control unit 18 includes the obstacle detection unit 113 and the collision avoidance control unit 114. The vehicle-mounted electronic control unit 18 is communicatively connected to an electronic control unit for an engine included in a common rail system, the lidar sensors 101, 102, the sonar units 103, 104, etc. via a CAN.

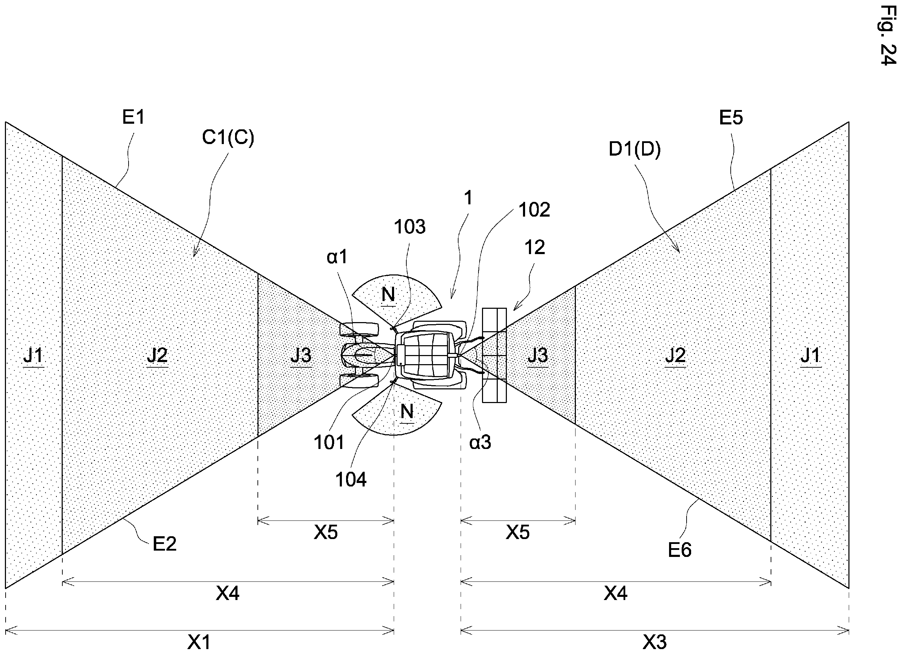

As illustrated in FIG. 11 and FIG. 24, as the lidar sensors 101, 102, the front lidar sensor 101 is provided to be used for detecting an obstacle on the front side of the tractor 1 (the traveling body 7) in which the front side of the tractor 1 is set as the measurement range C, and the rear lidar sensor 102 is provided to be used for detecting an obstacle on the rear side of the tractor 1 (the traveling body 7) in which the rear side of the tractor 1 is set as the measurement range D.

The measurement range C of the front lidar sensor 101 is described.

The front lidar sensor 101 has the right-and-left measurement range C1 in the right-and-left direction as illustrated in FIG. 24 and has the vertical measurement range C2 in the vertical direction as illustrated in FIG. 11. Thus, the top-to-bottom, right-to-left, and front-to-back four-sided pyramid measurement range C included in the right-and-left measurement range C1 and the vertical measurement range C2 within the range to the position away from itself by the first set distance X1 (see FIG. 24) is set for the front lidar sensor 101.

As illustrated in FIG. 24, the right-and-left measurement range C1 for the front lidar sensor 101 is a symmetric range with respect to the right-and-left direction of the traveling body 7 with the right-and-left center line of the traveling body 7 as the axis of symmetry. The right-and-left measurement range C1 is set to be a range with the first set angle α1 between the first boundary line E1 and the second boundary line E2 extending from the front lidar sensor 101. The right-and-left measurement range C1 is set to be a range larger than the width of the tractor 1 and the width of the work device 12 in the width direction of the traveling body 7. As for the right-and-left measurement range C1, the size of the range may be changed as appropriate.

As illustrated in FIG. 11, the vertical measurement range C2 for the front lidar sensor 101 is set to be a range with the second set angle α2 between the third boundary line E3 and the fourth boundary line E4 extending from the front lidar sensor 101. The third boundary line E3 is set to be a horizontal line extending to the front side from the front lidar sensor 101 in a horizontal direction, and the fourth boundary line E4 is set to be a straight line positioned below the first tangent line G1 from the front lidar sensor 101 to the front upper portion of the front wheel 5. The vertical measurement range C2 is set such that the first center line F1 between the third boundary line E3 and the fourth boundary line E4 is located above the hood 8 so as to ensure a sufficiently large measurement range above the hood 8. As the fourth boundary line E4 is set to be below the first tangent line G1, it is possible to measure the measurement target, such as an object or a person, even if the measurement target is present at the position near the front side end of the traveling body 7 (the front side end of the hood 8).

As illustrated in FIG. 11, as part of the hood 8 and part of the front wheel 5 fall within the vertical measurement range C2 of the front lidar sensor 101, there is a possibility that the part of the hood 8 or the part of the front wheel 5 is improperly detected as an obstacle when the obstacle detection unit 113 performs the obstacle detection process based on the measurement information of the front lidar sensor 101. Therefore, the first masking process (corresponding to a masking process) is performed to prevent the improper detection. For the first masking process, the range where part of the hood 8 and part of the front wheel 5 are present within the measurement range C of the front lidar sensor 101 is previously set as the masking range L (see FIG. 13) for which obstacle detection is not performed. The first masking process is described later.

Thus, the obstacle detection unit 113 performs the obstacle detection process based on the measurement information of the front lidar sensor 101 to detect the presence or absence of an obstacle in the range that is included in the right-and-left measurement range C1 (see FIG. 24) in the right-and-left direction, is included in the vertical measurement range C2 (see FIG. 11) in the vertical direction, and excludes the masking range L.

The measurement range D of the rear lidar sensor 102 is described.

As is the case with the front lidar sensor 101, the rear lidar sensor 102 has the right-and-left measurement range D1 in the right-and-left direction as illustrated in FIG. 24 and the vertical measurement range D2 in the vertical direction as illustrated in FIG. 11. Thus, the top-to-bottom, right-to-left, and front-to-back four-sided pyramid measurement range D included in the right-and-left measurement range D1 and the vertical measurement range D2 within the range to the position away from itself by the third set distance X3 (see FIG. 24) is set for the rear lidar sensor 102. Further, X1 and X3 may be set to the identical distance or may be set to different distances.

As illustrated in FIG. 24, as is the case with the front lidar sensor 101, the right-and-left measurement range D1 of the rear lidar sensor 102 is set to be a range with the third set angle α3 between the fifth boundary line E5 and the sixth boundary line E6 extending from the rear lidar sensor 102. The right-and-left measurement range D1 is set to be a range larger than the width of the tractor 1 and the width of the work device 12 in the width direction of the traveling body 7, as is the case with the front lidar sensor 101. As for the right-and-left measurement range D1, the size of the range may be changed as appropriate.

As illustrated in FIG. 11, the vertical measurement range D2 of the rear lidar sensor 102 is set to be a range with the fourth set angle α4 between the seventh boundary line E7 and the eighth boundary line E8 extending from the rear lidar sensor 102. As the work device 12 is provided so as to be lifted and lowered between the lifting position and the lowering position, the work device 12 located in the lowering position is illustrated in a solid line and the work device 12 located in the lifting position is illustrated in a dotted line in FIG. 11. The seventh boundary line E7 is set to be a horizontal line extending to the rear side from the rear lidar sensor 102 in a horizontal direction, and the eighth boundary line E8 is set to be a straight line positioned below the second tangent line G2 from the rear lidar sensor 102 to the rear upper portion of the work device 12 located in the lowering position. The vertical measurement range D2 is set such that the second center line F2 between the seventh boundary line E7 and the eighth boundary line E8 is located above the work device 12 (illustrated in a dotted line in FIG. 11) located in the lifting position so as to ensure a sufficiently large measurement range above the work device 12 in the lifting position. As the eighth boundary line E8 is set to be below the second tangent line G2, it is possible to measure the measurement target, such as an object or a person, even if the measurement target is present at the position near the rear side end of the work device 12 in the lowering position.

As part of the work device 12 falls within the vertical measurement range D2 of the rear lidar sensor 102, there is a possibility that the part of the work device 12 is improperly detected as an obstacle when the obstacle detection unit 113 performs the obstacle detection process based on the measurement information of the rear lidar sensor 102. Therefore, the second masking process is performed to prevent the improper detection. For the second masking process, the range where part of the work device 12 is present within the measurement range D of the rear lidar sensor 102 is previously set as the masking range L (see FIG. 14, FIG. 15) for which obstacle detection is not performed.

As illustrated in FIG. 11, the work device 12 is lowered and lifted between the lowering position and the lifting position (the position illustrated in a dotted line in the figure). The tractor 1 travels while performing predetermined work with the work device 12 lowered in the lowering position or simply travels without performing predetermined work with the work device 12 lifted in the lifting position. Therefore, for the second masking process, the masking range L1 for the lowering position illustrated in FIG. 14 and the masking range L2 for the lifting position illustrated in FIG. 15 are set as the masking range L. The second masking process is described later.

Thus, the obstacle detection unit 113 performs the obstacle detection process based on the measurement information of the rear lidar sensor 102 to detect the presence or absence of an obstacle in the range that is included in the right-and-left measurement range D1 (see FIG. 24) in the right-and-left direction, is included in the vertical measurement range D2 (see FIG. 11) in the vertical direction, and excludes the masking ranges L1, L2. The obstacle detection unit 113 performs the obstacle detection process using the masking range L1 for the lowering position when the work device 12 is in the lowering position and performs the obstacle detection process using the masking range L2 for the lifting position when the work device 12 is in the lifting position.

The sonar units 103, 104 are described below.

The sonar units 103, 104 are configured to measure the distance to the measurement target based on the round-trip time during which a projected ultrasonic wave hits the measurement target and returns back. The sonar units 103, 104 are configured to detect the measurement target as an obstacle when any object is present as the measurement target within the measurement range and measure the distance to the obstacle.

The right sonar unit 103 whose measurement range is the right side of the tractor 1 (the travelling body 7) illustrated in FIG. 24 and the left sonar unit 104 whose measurement range is the left side of the tractor 1 (the travelling body 7) illustrated in FIG. 24 are provided as the sonar units 103, 104.

As illustrated in FIG. 24, the measurement range N of the right sonar unit 103 and the measurement range N of the left sonar unit 104 are different from each other only in that the direction extending from the traveling body 7 is opposite with respect to the right-and-left direction, and the measurement ranges N on the right and left sides are symmetrical.

The measurement target of the sonar units 103, 104 is the outer side of the traveling body 7. The sonar units 103, 104 are attached to the traveling body 7 so as to project ultrasonic waves downward by a predetermined angle with respect to the horizontal direction, and the measurement range N is set so as to extend from the sonar units 103, 104 downward by a predetermined angle. The measurement range N of the sonar units 103, 104 is a range with a radius that is the distance from the sonar units 103, 104 to the outer side of the traveling body 7 by a predetermined distance, and it is set between the right-and-left measurement range C1 of the front lidar sensor 101 and the right-and-left measurement range D1 of the rear lidar sensor 102 in the front-and-back direction of the traveling body 7.

Thus, the obstacle detection unit 113 performs the obstacle detection process based on the measurement information of the sonar units 103, 104 to detect the presence or absence of an obstacle in the right and left measurement ranges N.

As the obstacle detection process by the obstacle detection unit 113 and the collision avoidance control by the collision avoidance control unit 114 are the same as the obstacle detection process by the obstacle control unit 107 and the collision avoidance control by the obstacle control unit 107 in the first embodiment, their descriptions are omitted.

The calibration for setting the installation states of the lidar sensors 101, 102 in the tractor 1 to the desired states is described below.

As the lidar sensors 101, 102 measure the distance to the measurement target in three dimensions, the measured distance to the measurement target is different from the supposed one if the installation states, such as the installation directions, of the lidar sensors 101, 102 are different from the desired states. Therefore, to set the installation directions, or the like, of the lidar sensors 101, 102 in the tractor 1 to the desired installation directions, the calibration operation is performed to set the installation states, such as the installation directions, of the lidar sensors 101, 102 to the desired states. Thus, as illustrated in FIG. 23, the vehicle-mounted electronic control unit 18 includes a calibration processing unit 115 that performs a calibration process.

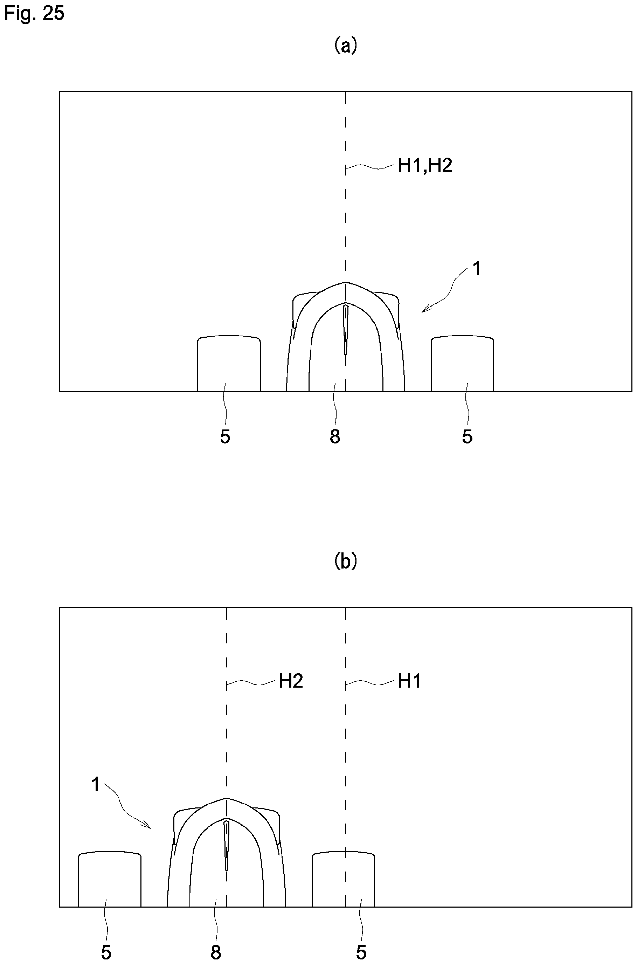

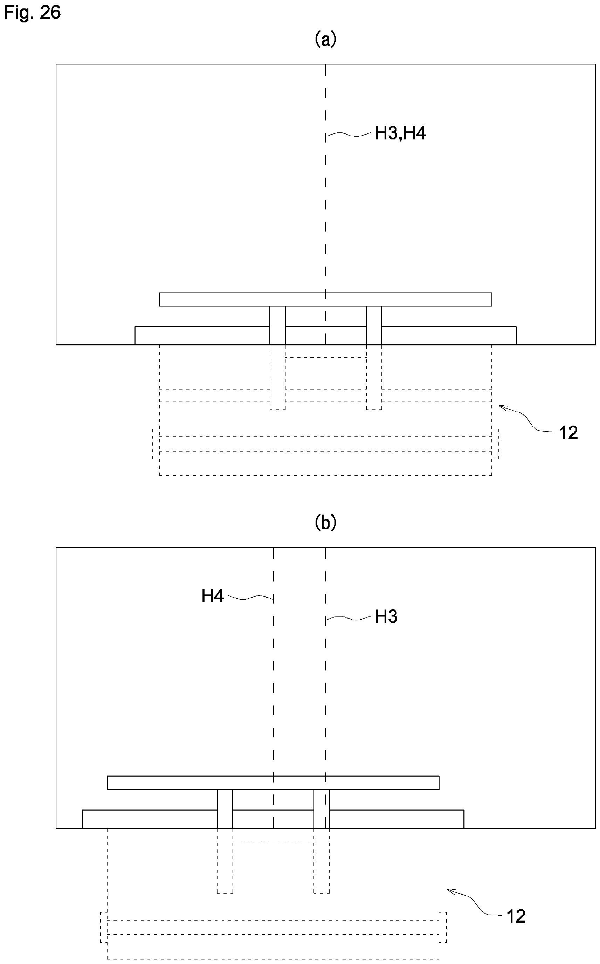

During the calibration process, the lidar sensors 101, 102 actually execute the measurement, and the calibration processing unit 115 causes the display device, such as the display unit of the tractor 1 or the display unit 51 of the mobile communication terminal 3, to display the three-dimensional image generated from the measurement information, as illustrated in FIGs. 25 and 26.

As illustrated in FIG. 11, as the part of the hood 8 of the tractor 1 and the parts of the front wheels 5 (corresponding to part of the work vehicle main body) fall within the measurement range C of the front lidar sensor 101, the three-dimensional image generated from the measurement information of the front lidar sensor 101 includes the part of the hood 8 of the tractor 1 and the parts of the front wheels 5, as illustrated in FIG. 25(a). Therefore, the calibration processing unit 115 causes a central portion H1 of the measurement range C of the front lidar sensor 101 with respect to the right-and-left direction and a central portion H2 of the part of the hood 8 and the parts of the front wheels 5 with respect to the right-and-left direction (the central portion of the tractor 1 with respect to the left-right direction) to be displayed in an overlapped manner on the three-dimensional image displayed on the display device.

As for the installation state of the front lidar sensor 101, the desired state is the state where the central portion H1 of the measurement range C of the front lidar sensor 101 matches the central portion of the tractor 1 with respect to the right-and-left direction. Therefore, as illustrated in FIG. 25(a), when the central portion H1 of the measurement range C of the front lidar sensor 101 matches the central portion H2 of the part of the hood 8 and the parts of the front wheels 5 included in the measurement range C of the front lidar sensor 101, the installation state (installation direction) of the front lidar sensor 101 is the desired state (the desired installation direction).

As illustrated in FIG. 25(b), when the central portion H2 of the part of the hood 8 and the parts of the front wheels 5 included in the measurement range C of the front lidar sensor 101 is shifted to left with respect to the central portion H1 of the measurement range C of the front lidar sensor 101 in the right-and-left direction, the installation direction of the front lidar sensor 101 is shifted to right with respect to the desired installation direction. Therefore, the user, or the like, changes the installation direction of the front lidar sensor 101 to left to calibrate the installation direction of the front lidar sensor 101 to the desired installation direction. Here, for example, the calibration processing unit 115 may calculate the shift amount (the shift angle or the shift distance) between the central portion H1 and the central portion H2 and cause the calculated shift amount (the shift angle or the shift distance) between the central portion H1 and the central portion H2 to be displayed in an overlapped manner on the three-dimensional image displayed on the display device.

As the part of the work device 12 provided in the tractor 1 (corresponding to the part of a member provided in the work vehicle main body) falls within the measurement range D of the rear lidar sensor 102 as illustrated in FIG. 11, the three-dimensional image generated from the measurement information of the rear lidar sensor 102 includes the part of the work device 12 as illustrated in FIG. 26(a). FIG. 26(a) illustrates a state where the work device 12 is located at the lowering position. Therefore, the calibration processing unit 115 causes a central portion H3 of the measurement range D of the rear lidar sensor 102 with respect to the right-and-left direction and a central portion H4 of the work device 12 with respect to the right-and-left direction to be displayed in an overlapped manner on the three-dimensional image displayed on the display device. FIG. 26 illustrates the portion of the work device 12 present within the measurement range D of the rear lidar sensor 102 in a solid line and the portion present outside the measurement range D of the rear lidar sensor 102 in a dotted line.

As for the installation state of the rear lidar sensor 102, the desired state is the state where the central portion H3 of the measurement range D of the rear lidar sensor 102 matches the central portion of the tractor 1 with respect to the right-and-left direction. Therefore, as illustrated in FIG. 26(a), when the central portion H3 of the measurement range D of the rear lidar sensor 102 matches the central portion H4 of the part of the work device 12 included in the measurement range D of the rear lidar sensor 102, the installation state (installation direction) of the rear lidar sensor 102 is the desired state (the desired installation direction).

As illustrated in FIG. 26(b), when the central portion H4 of the part of the work device 12 included in the measurement range D of the rear lidar sensor 102 is shifted to left with respect to the central portion H3 of the measurement range D of the rear lidar sensor 102 in the right-and-left direction, the installation direction of the rear lidar sensor 101 is shifted to right with respect to the desired installation direction. Therefore, the user, or the like, changes the installation direction of the rear lidar sensor 102 to left to calibrate the installation direction of the rear lidar sensor 102 to the desired installation direction. Here, for example, the calibration processing unit 115 may calculate the shift amount (the shift angle or the shift distance) between the central portion H3 and the central portion H4 and cause the calculated shift amount (the shift angle or the shift distance) between the central portion H3 and the central portion H4 to be displayed in an overlapped manner on the three-dimensional image displayed on the display device.

As described above, the calibration processing unit 115 performs the calibration process to cause the three-dimensional image generated from the measurement information of the lidar sensors 101, 102 to be displayed on the display device, such as the display unit of the tractor 1 or the display unit 51 of the mobile communication terminal 3, as illustrated in FIGs. 25 and 26; thus, the user, or the like, executes calibration to adjust the installation states, such as the installation directions, of the lidar sensors 101, 102 and set the installation states of the lidar sensors 101, 102 to the desired states.

As the three-dimensional image generated from the measurement information of the lidar sensors 101, 102 is displayed on the display device, such as the display unit of the tractor 1 or the display unit 51 of the mobile communication terminal 3, during the calibration process by the calibration processing unit 115, the first masking process and the second masking process are performed by using the displayed three-dimensional image.

The first masking process and the second masking process are described.

First, the masking range L (see FIG. 13 to FIG. 15) is described; the masking range L is a range in which obstacle detection is not executed by the obstacle detection unit 113 and in which the execution of the collision avoidance control by the collision avoidance control unit 114 is restricted. The masking range L corresponds to a range that is included in the measurement ranges of the lidar sensors 101, 102 and that is excluded from the measurement of the distance (corresponding to position information) to the measurement target. In the masking range L, even if the lidar sensors 101, 102 measure some measurement target, the obstacle detection unit 113 refrains from detecting the measurement target as an obstacle during the obstacle detection process.

In order to perform the first masking process and the second masking process, the vehicle-mounted electronic control unit 18 includes a masking range setting unit 116 that sets the masking range L as illustrated in FIG. 23.

First, the first masking process is described.

After the calibration is executed to set the installation state of the front lidar sensor 101 to the desired state, the central portion H1 of the measurement range C of the front lidar sensor 101 matches the central portion H2 of the part of the hood 8 and the parts of the front wheels 5 included in the measurement range C of the front lidar sensor 101, as illustrated in FIG. 25(a). Therefore, the three-dimensional image generated from the measurement information of the front lidar sensor 101 after the calibration is the three-dimensional image illustrated in FIG. 13. As illustrated in FIG. 13, the masking range setting unit 116 sets the masking range L based on the reference range including the range La where the part of the hood 8 is present and the range Lb where the parts of the front wheels 5 are present. As the front wheels 5 are steered to right and left due to the operation of the steering wheel 38, the power steering mechanism 14, or the like, as illustrated in a dotted line in FIG. 13, it is preferable to set the masking range L so as to include the steering range (range of movement) in which the front wheels 5 are steered to right and left.

As illustrated in FIG. 13, the masking range setting unit 116 sets, as the masking range L, the mountain-shaped range larger than the reference range including the range La where the part of the hood 8 is present and the range Lb where the front wheels 5 are present by a specified range. For example, the masking range L may be set to have the shape corresponding to the shapes of the hood 8 and the front wheels 5 so as to exclusively include the range La where the part of the hood 8 is present and the range Lb where the front wheels 5 are present, and the range and the shape of the masking range L may be changed as appropriate.

When the masking range setting unit 116 sets the masking range L, the masking range setting unit 116 may set the range specified by the user, or the like, on the display device as the masking range L as the display device presents the three-dimensional image. As the display device presents the three-dimensional image including the range La where the part of the hood 8 is present and the ranges Lb where the front wheels 5 are present, the user, or the like, may easily designate the range including the range La where the part of the hood 8 is present and the ranges Lb where the front wheels 5 are present.

As described above, the masking range setting unit 116 sets the masking range L by using the part of the hood 8 and the parts of the front wheels 5 included in the measurement range C of the front lidar sensor 101 based on the measurement information of the front lidar sensor 101 after the installation state of the front lidar sensor 101 is calibrated to the desired state. Thus, the part of the hood 8 and the parts of the front wheels 5 may be used for setting the masking range L as well as for the calibration of the front lidar sensor 101, which achieves the effective utilization and an improvement in the operating efficiency.

The second masking process is described.

After the calibration is executed to set the installation state of the rear lidar sensor 102 to the desired state, the central portion H3 of the measurement range C of the rear lidar sensor 102 matches the central portion H4 of the part of the work device 12 included in the measurement range D of the rear lidar sensor 102, as illustrated in FIG. 26(a). Therefore, the three-dimensional image generated from the measurement information of the rear lidar sensor 102 after the calibration is the three-dimensional image illustrated in FIG. 14. As illustrated in FIG. 14, the masking range setting unit 116 sets, as the masking range L1, the rectangular range larger than the reference range including the range Lc where the part of the work device 12 is present by a specified range.

During the second masking process, not only the masking range L1 for the lowering position as illustrated in FIG. 14 but also the masking range L2 for the lifting position as illustrated in FIG. 15 are set as the masking range L. A lifting/lowering operating tool in the cabin 10 is operated to locate the work device 12 in the lifting position and, by using the three-dimensional image generated from the measurement information of the rear lidar sensor 102 at that time, the masking range setting unit 116 sets the masking range L2 for the lifting position.

Furthermore, the masking ranges L1, L2 are set to be a range in three dimensions, in the front-and-back direction, the right-and-left direction, and the vertical direction. For example, the masking ranges L1, L2 may be set to have the shape corresponding to the shape of the work device 12 so as to exclusively include the range Lc where the work device 12 is present, and the ranges and the shapes of the masking ranges L1, L2 may be changed as appropriate.

When the masking range setting unit 116 sets the masking ranges L1, L2, the masking range setting unit 116 may set the range specified by the user, or the like, on the display device as the masking ranges L1, L2 as the display device presents the three-dimensional image. As the display device presents the three-dimensional image including the range Lc where the part of the work device 12 is present, the user, or the like, may easily designate the range including the range Lc where the part of the work device 12 is present.

As described above, the masking range setting unit 116 sets the masking range L by using the part of the work device 12 included in the measurement range D of the rear lidar sensor 102 based on the measurement information of the rear lidar sensor 102 after the installation state of the rear lidar sensor 102 is calibrated to the desired state. Thus, the part of the work device 12 may be used for setting the masking range L as well as for the calibration of the rear lidar sensor 102, which achieves the effective utilization and an improvement in the operating efficiency.

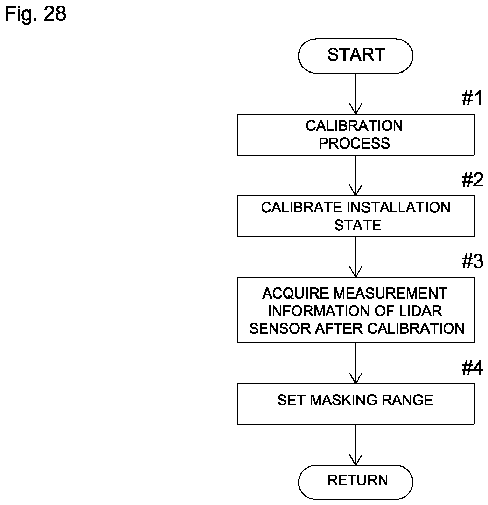

Based on the flowchart in FIG. 27, the flow of operations for calibrating the installation states of the lidar sensors 101, 102 and setting the masking range L of the lidar sensors 101, 102 is described.

First, the lidar sensors 101, 102 execute the measurement, and the calibration processing unit 115 performs a calibration process based on the measurement information of the lidar sensors 101, 102 so that the user, or the like, changes the installation directions or the like, of the lidar sensors 101, 102 so as to calibrate the installation states of the lidar sensors 101, 102 (Step #1, Step #2).

The masking range setting unit 116 acquires the three-dimensional image generated from the measurement information of the lidar sensors 101, 102 after the installation state is calibrated (Step #3). The masking range setting unit 116 uses the acquired three-dimensional image to set the masking range L (Step #4).

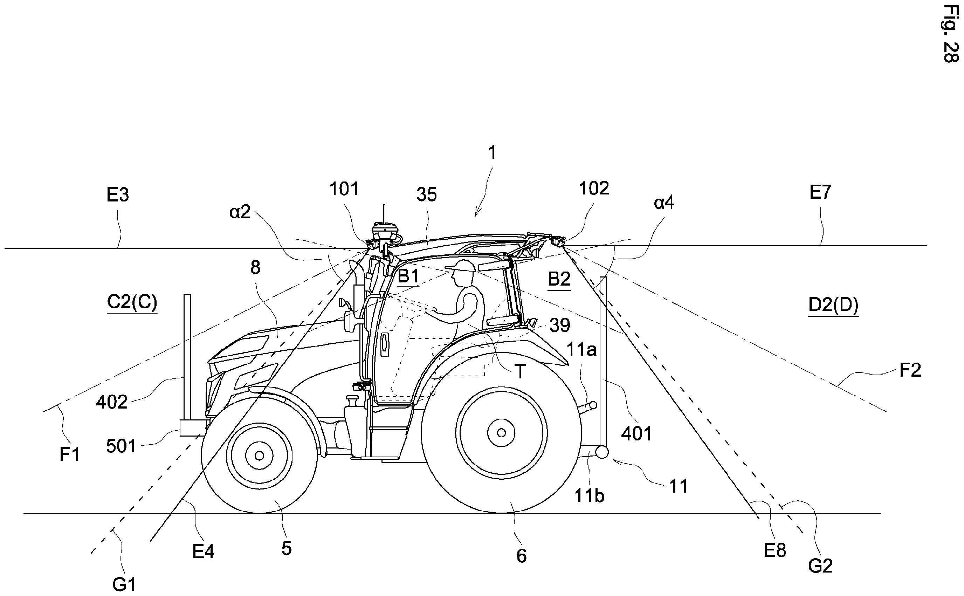

In the case described in FIG. 13 to FIG. 15, FIG. 25, and FIG. 26, both the front lidar sensor 101 and the rear lidar sensor 102 are installed in such a state that the measurement ranges C, D include the part of the main body (the hood 8 or the front wheels 5) of the tractor 1 or the member (the work device 12) provided in the tractor 1; however, as illustrated in for example FIG. 28, the installation state of the rear lidar sensor 102 may be calibrated to the desired state even in a case where the tractor 1 does not include the work device 12 and the measurement range D of the rear lidar sensor 102 does not include the part of the work device 12.

In this case, as illustrated in FIG. 28, a rear calibration jig (corresponding to a calibration jig) 401 may be detachably attached to the main body of the tractor 1 (corresponding to the work vehicle main body) in such a manner that it is included in the measurement range D of the rear lidar sensor 102. In the three-point link mechanism 11 including an upper link 11a and a lower link 11b, the rear calibration jig 401 is attached to the lower link 11b extending rearward of the upper link 11a. The rear calibration jig 401 is formed in the shape of a pole extending upward from the lower link 11b, and the upper side portion thereof is included in the measurement range D of the rear lidar sensor 102.

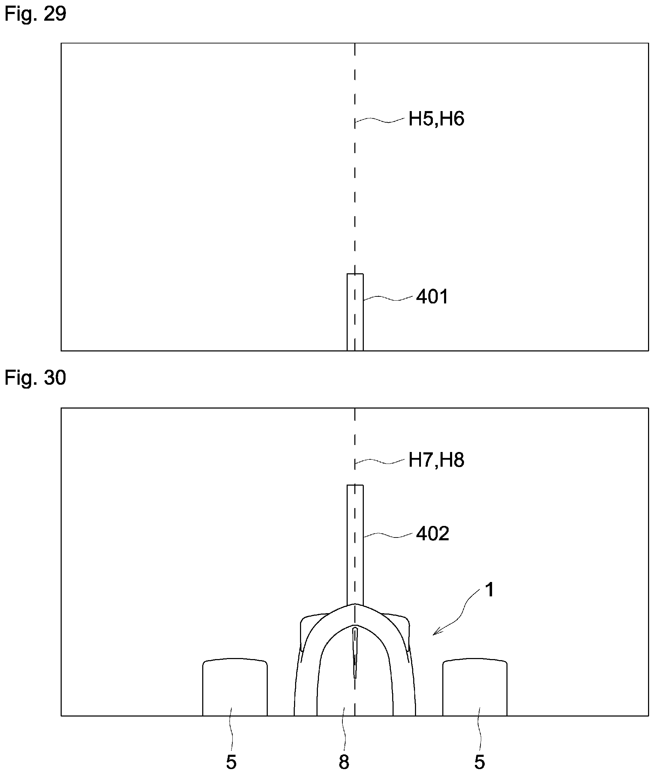

Here, the calibration processing unit 115 executes a calibration process so as to cause the display device such as the display unit of the tractor 1 or the display unit 51 of the mobile communication terminal 3 to present the three-dimensional image generated from the measurement information of the rear lidar sensor 102, as illustrated in FIG. 29. The calibration processing unit 115 causes a central portion H5 of the measurement range D of the rear lidar sensor 102 with respect to the right-and-left direction and a central portion H6 of the rear calibration jig 401 with respect to the right-and-left direction to be displayed in an overlapped manner. Thus, the user, or the like, may calibrate the installation state of the rear lidar sensor 102 to the desired state such that the central portion H5 matches the central portion H6. Here, FIG. 29 illustrates a state where the central portion H5 of the measurement range D of the rear lidar sensor 102 with respect to the right-and-left direction matches the central portion H6 of the rear calibration jig 401 with respect to the right-and-left direction.

As described above, when the tractor 1 does not include the work device 12, the front lidar sensor 101 corresponds to a first position information measurement sensor, and the rear lidar sensor 102 corresponds to a second position information measurement sensor. In this case, the calibration processing unit 115 performs a calibration process on the front lidar sensor 101 by using the part of the hood 8 and the parts of the front wheels 5 based on the measurement information of the front lidar sensor 101, and the masking range setting unit 116 sets the masking range L by using the part of the hood 8 and the parts of the front wheels 5 based on the measurement information of the front lidar sensor 101 after the installation state of the front lidar sensor 101 is calibrated to the desired state. The calibration processing unit 115 performs a calibration process on the rear lidar sensor 101 by using the rear calibration jig 401 based on the measurement information of the rear lidar sensor 102.

Further, as illustrated in FIG. 28, a front calibration jig (corresponding to a calibration jig) 402 may be detachably attached to the main body of the tractor 1 (corresponding to the work vehicle main body) in such a state that it is included in the measurement range C of the front lidar sensor 101. The front calibration jig 402 is attached to a weight mounting portion 501 provided in the lower front end of the hood 8. The front calibration jig 402 is formed in the shape of a pole extending upward from the weight mounting portion 501, and the upper side portion thereof is included in the measurement range C of the front lidar sensor 101.

Here, the calibration processing unit 115 executes a calibration process so as to cause the display device such as the display unit of the tractor 1 or the display unit 51 of the mobile communication terminal 3 to present the three-dimensional image generated from the measurement information of the front lidar sensor 101, as illustrated in FIG. 30. The calibration processing unit 115 causes a central portion H7 of the measurement range C of the front lidar sensor 101 with respect to the right-and-left direction and a central portion H8 of the front calibration jig 402 with respect to the right-and-left direction to be displayed in an overlapped manner. Thus, the user, or the like, may calibrate the installation state of the front lidar sensor 101 to the desired state such that the central portion H7 matches the central portion H8. Here, FIG. 30 illustrates a state where the central portion H7 of the measurement range C of the front lidar sensor 101 with respect to the right-and-left direction matches the central portion H8 of the front calibration jig 402 with respect to the right-and-left direction.

### [Third Embodiment]

A third embodiment is described below; the same component as that in the first embodiment is for example denoted by the same reference numeral with the description thereof omitted, and a component different from that in the first embodiment is primarily described.

The first masking process and the second masking process are further described below.

First, the masking range L (see FIG. 13 to FIG. 15) is described; the masking range L is a range for restricting the execution of the collision avoidance control by the obstacle control unit 107 without detecting an obstacle. In the masking range L, although the lidar sensors 101, 102 measure a certain measurement target, the obstacle control unit 107 refrains from detecting the measurement target as an obstacle during the obstacle detection process.

As illustrated in FIG. 11, when the part of the hood 8 and the parts of the front wheels 5 are present within the measurement range C of the front lidar sensor 101, the first masking process is performed to set the masking range L (see FIG. 13) so as to prevent the obstacle control unit 107 from improperly detecting the part of the hood 8 and the parts of the front wheels 5 as obstacles and prevent the collision avoidance control from being executed due to the improper detection. Furthermore, as illustrated in FIG. 11, when the part of the work device 12 is present within the measurement range D of the rear lidar sensor 102, the second masking process is performed to set the masking range L (see FIG. 14 and FIG. 15) so as to prevent the obstacle control unit 107 from improperly detecting the part of the work device 12 as an obstacle and prevent the collision avoidance control from being executed due to the improper detection.

As illustrated in FIG. 11, the part of the hood 8 and the part of the front wheel 5 fall within the measurement range C of the front lidar sensor 101. While the hood 8 is present at a certain position, the front wheel 5 is a movable part as the front wheel 5 is steered to right and left due to the operation by the steering wheel 38, the power steering mechanism 14, etc. Therefore, during the first masking process, the masking range L needs to be set in accordance with the range of movement of the front wheel 5.

Therefore, in order to set the masking range L in accordance with the range of movement of the movable part during the first masking process, as illustrated in FIG. 2, the tractor 1 includes: the range-of-movement acquisition unit 110 that acquires, for example, the range of movement of the movable part such as the front wheel 5; and the masking range setting unit 111 that sets the masking range L in addition to the lidar sensors 101, 102 and the obstacle control unit 107.

For example, during the first masking process, the actual measurement using the front lidar sensor 101 is performed as the preprocessing to use the front lidar sensor 101, and the masking range L (see FIG. 13) is set while a three-dimensional image generated from the measurement information at that time is displayed on the display device such as the display unit of the tractor 1 or the display unit 51 of the mobile communication terminal 3.

The flow of operations in the first masking process is described based on the flowchart illustrated in FIG. 16.

In the first masking process, first, the measurement is started with the front lidar sensor 101 so that a three-dimensional image is generated from the measurement result of the front lidar sensor 101 and, as illustrated in FIG. 13, the generated three-dimensional image is displayed on the display device such as the display unit of the tractor 1 or the display unit 51 of the mobile communication terminal 3 (Step #1).

The user, or the like, operates the steering wheel 38, or the like, to steer the front wheel 5, which is a movable part, to right and left. Accordingly, the range-of-movement acquisition unit 110 acquires the range of movement (the steering position on the right side and the steering position on the left side) during the actual steering of the front wheel 5 to right and left based on the measurement information of the front lidar sensor 101 (Steps #2, #3). Here, as illustrated in a dotted line in FIG. 13, the display device such as the display unit of the tractor 1 or the display unit 51 of the mobile communication terminal 3 displays the three-dimensional image including the range of movement of the front wheel 5 acquired by the range-of-movement acquisition unit 110.

The range-of-movement acquisition unit 110 stores the acquired range of movement of the front wheel 5 in the vehicle-mounted storage unit 185 (corresponding to a storage unit) (Step #4). As illustrated in FIG. 13, the masking range setting unit 111 sets the masking range L in accordance with the range of movement of the front wheel 5 acquired by the range-of-movement acquisition unit 110 (Step #5).

As illustrated in FIG. 13, the masking range setting unit 111 sets, as the masking range L, the mountain-shaped range larger than the reference range including the range La where the part of the hood 8 is present and the range Lb of movement of the front wheel 5 by a specified range. For example, the masking range L may be set to have the shape corresponding to the shapes of the hood 8 and the front wheel 5 so as to exclusively include the range La where the part of the hood 8 is present and the range Lb of movement of the front wheel 5, and the range and the shape of the masking range L may be changed as appropriate.

When the masking range setting unit 111 sets the masking range L, the masking range setting unit 111 may set the range specified by the user, or the like, on the display device as the masking range L as the display device presents the three-dimensional image. As the display device presents the three-dimensional image including the range La in which the part of the hood 8 is present and the ranges Lb of movement of the front wheels 5, the user, or the like, may easily designate the range including the range La where the part of the hood 8 is present and the ranges Lb of movement of the front wheels 5.

The part of the work device 12 falls within the measurement range D of the rear lidar sensor 102. As illustrated in FIG. 11, the work device 12 is a movable part as the work device 12 is lowered and lifted between the lowering position and the lifting position (the position indicated in a dotted line in the figure). Therefore, in the second masking process, the masking range L needs to be set in accordance with the range of movement of the work device 12.

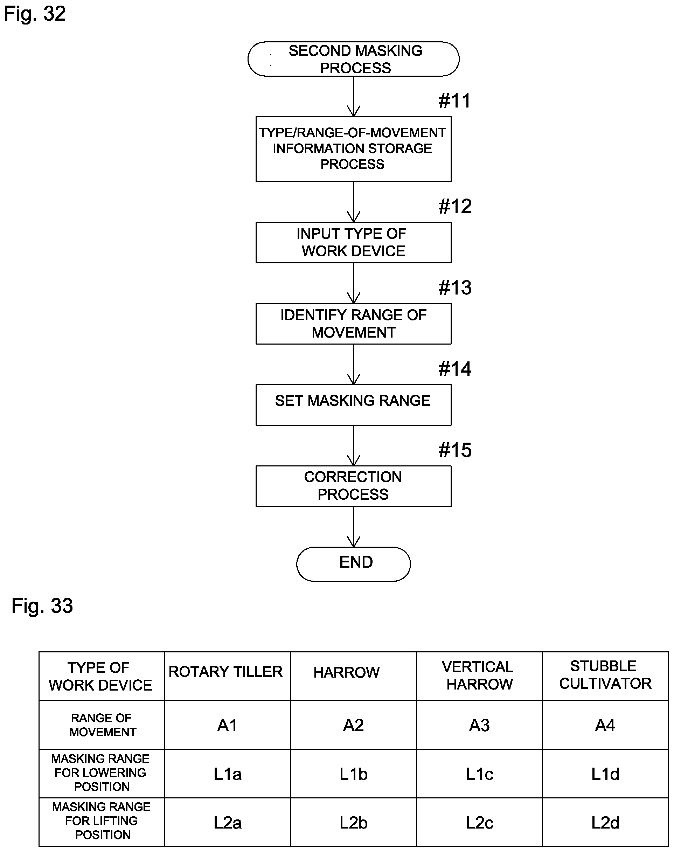

During the second masking process, the masking range L is set by using the type/range-of-movement information (see FIG. 33) associating the type of the work device 12 with the range of movement. As the work device 12, multiple types of the work devices 12 such as a harrow, a vertical harrow, or a stubble cultivator, as well as a rotary tiller may be coupled to the three-point link mechanism 11. Therefore, as illustrated in FIG. 33, for each of the types of the work devices 12, the type/range-of-movement information associates the type and the range of movement.

In the second masking process, as the preprocessing to use the rear lidar sensor 102, the type/range-of-movement information is previously stored in the rear lidar sensor 102, and the masking range L is set by using the type/range-of-movement information in response to the input of information such as the type of the work device 12.

The flow of operations in the second masking process is described based on the flowchart illustrated in FIG. 32.

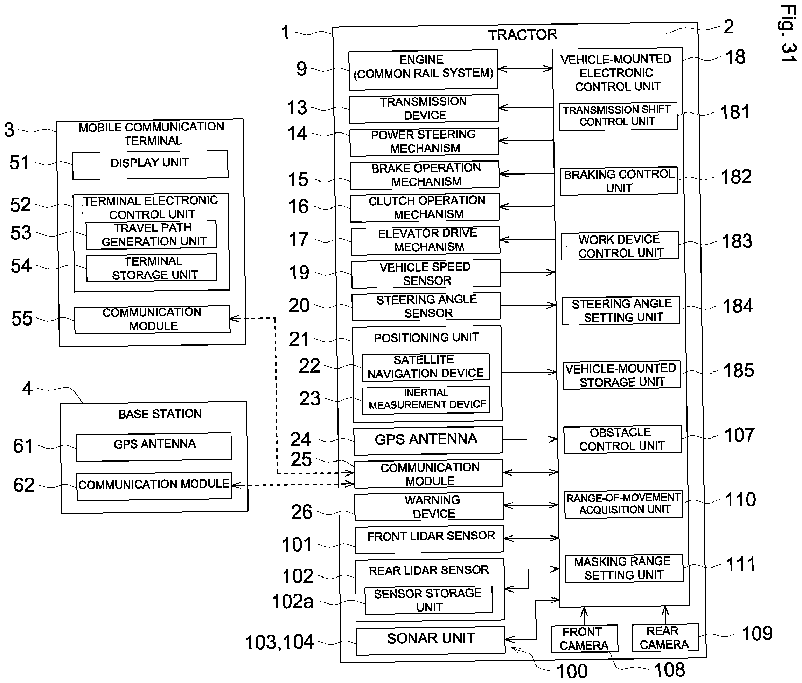

In the second masking process, a type/range-of-movement information storage process is initially performed to store the type/range-of-movement information (see FIG. 33) in a sensor storage unit 102a (see FIG. 31) of the rear lidar sensor 102 (Step #11). During the type/range-of-movement storage process, the range of movement of the work device 12 is acquired for each of the types of the work devices 12 by experiments or the like, and the type/range-of-movement information (see FIG. 33) associating the type of the work device 12 with the range of movement is stored in the sensor storage unit 102a (corresponding to a storage unit).

Furthermore, although the type/range-of-movement information is stored in the sensor storage unit 102a during the type/range-of-movement storage process, the type/range-of-movement information may be stored in for example the vehicle-mounted storage unit 185, and the storage unit in which the type/range-of-movement information is stored may be changed as appropriate.

As described above, the tractor 1 travels while performing predetermined work with the work device 12 lowered in the lowering position or simply travels without performing predetermined work with the work device 12 lifted in the lifting position. Therefore, for the second masking process, the lowering-position masking range L1 (see FIG. 14) when the work device 12 is in the lowering position and the lifting-position masking range L2 (see FIG. 15) when the work device 12 is in the lifting position are set as the masking range L.

FIG. 14 and FIG. 15 illustrate a state where the display device presents a three-dimensional image in the measurement range D of the rear lidar sensor 102. In FIG. 14 and FIG. 15, the part of the work device 12 present within the measurement range D of the rear lidar sensor 102 is illustrated in a solid line, and the part present outside the measurement range D of the rear lidar sensor 102 is illustrated in a dotted line. Therefore, the position where the work device 12 is present in FIG. 14 corresponds to the lower limit position of the work device 12 in the lifting/lowering range, and the position where the work device 12 is present in FIG. 15 corresponds to the upper limit position of the work device 12 in the lifting/lowering range.

As illustrated in FIG. 14 and FIG. 15, a rectangular range larger than the reference range including the range Lc of movement (the lower limit position or the upper limit position in the lifting/lowering range) of the work device 12 by a specified range is set as the masking ranges L1, L2. For example, the masking range L may be set to have the shape corresponding to the shape of the work device 12 so as to exclusively include the range Lc of movement of the work device 12, and the range and the shape of the masking ranges L1, L2 may be changed as appropriate.

During the type/range-of-movement information storage process, with regard to each of the of types of the work devices 12, after the range of movement of the work device 12 is acquired, the masking range for the lowering position and the masking range for the lifting position are set based on the range of movement. Therefore, as illustrated in FIG. 33, the type/range-of-movement information is the information including not only the information associating the type of the work device 12 with the range of movement but also the information associating the type of the work device 12 with the masking range for the lowering position and the masking range for the lifting position. For example, when the type of the work device 12 is a harrow, the range of movement of the harrow during the actual operation is A2, the masking range for the lowering position is set to L1b, and the masking range for the lifting position is set to L2b.

Regarding the method for acquiring the range of movement of the work device 12, although it is possible to acquire it by experiments, or the like, as described above, as other acquisition methods may be also applied. For example, the user, or the like, may use the mobile communication terminal 3, or the like, to input the size data regarding the size of the work device 12 including the work device width, the length, the height, etc. of the work device 12 so as to obtain the range of movement of the work device 12 from the size data. As illustrated in FIG. 1, the work device 12 is coupled to the three-point link mechanism 11 at the rear portion of the traveling body 7, and the installation position of the three-point link mechanism 11 in the tractor 1 and the lifting/lowering range of the three-point link mechanism 11 have specified values. Accordingly, the range of movement of the work device 12 may be obtained by using the input size data, the specified value of the installation position of the three-point link mechanism 11 in the tractor 1, or the like.

Referring back to FIG. 32, the type/range-of-movement information storage process is performed so that the type/range-of-movement information as illustrated in FIG. 33 is stored in the sensor storage unit 102a. When the type of the work device 12 actually coupled to the rear portion of the traveling body 7 is input, the masking range setting unit 111 identifies, in accordance with the input type, the range of movement of the work device 12 corresponding to the input type from the type/range-of-movement information and sets the masking range L in accordance with the identified range of movement of the work device 12 (Steps #12 to #14).

When the type/range-of-movement information illustrated in FIG. 33 is stored, the type of the work device 12 is associated with not only the range of movement but also the masking range for the lowering position and the masking range for the lifting position. In accordance with the input type, the masking range setting unit 111 identifies the range of movement of the work device 12 corresponding to the input type, the masking range L1 for the lowering position, and the masking range L2 for the lifting position from the type/range-of-movement information and, as illustrated in FIG. 14 and FIG. 15, sets the masking range L1 for the lifting position and the masking range L2 for the lifting position.

For example, when the type of the work device 12 is a harrow, the masking range setting unit 111 sets the range of movement to A2, sets the masking range for the lowering position to L1b, and sets the masking range for the lifting position to L2b, as illustrated in FIG. 33. With regard to the input of the type of the work device 12, when the travel path generation unit 53 generates the target travel path P (see FIG. 3) as described above, the vehicle body data such as the type of the work device 12 is input. Therefore, when the vehicle body data is input, the masking range setting unit 111 may acquire the type of the work device 12.

As described above, the masking range setting unit 111 sets the masking range L by using the type/range-of-movement information (see FIG. 33) stored in the sensor storage unit 102a, and the masking range setting unit 111 may execute a correction process to correct the set masking range L (Step #15).

During the correction process, after the rear lidar sensor 102 has started the measurement, the user, or the like, operates for example an operating tool for lifting and lowering in the cabin 10 to elevate the work device 12 between the lifting position and the lowering position so as to move the work device 12 as if to actually perform work. In the actual work, some of the work devices 12 are lifted and lowered, but others are moved in the vertical direction and the horizontal direction of the traveling body 7, and therefore the work device 12 is moved in accordance with the actual work. Accordingly, the range-of-movement acquisition unit 110 acquires the range of movement during the movement of the work device 12 in accordance with the actual work based on the measurement information of the rear lidar sensor 102. Here, a three-dimensional image is generated from the measurement result of the rear lidar sensor 102, and the generated three-dimensional image is displayed on the display device such as the display unit of the tractor 1 or the display unit 51 of the mobile communication terminal 3.

The masking range setting unit 111 compares the actual range of movement of the work device 12 acquired by the range-of-movement acquisition unit 110 with the range of movement of the work device 12 specified from the type/range-of-movement information and, when there is a difference between the ranges, corrects the set masking range L. The masking range setting unit 111 corrects the set masking range L in accordance with the actual range of movement of the work device 12.

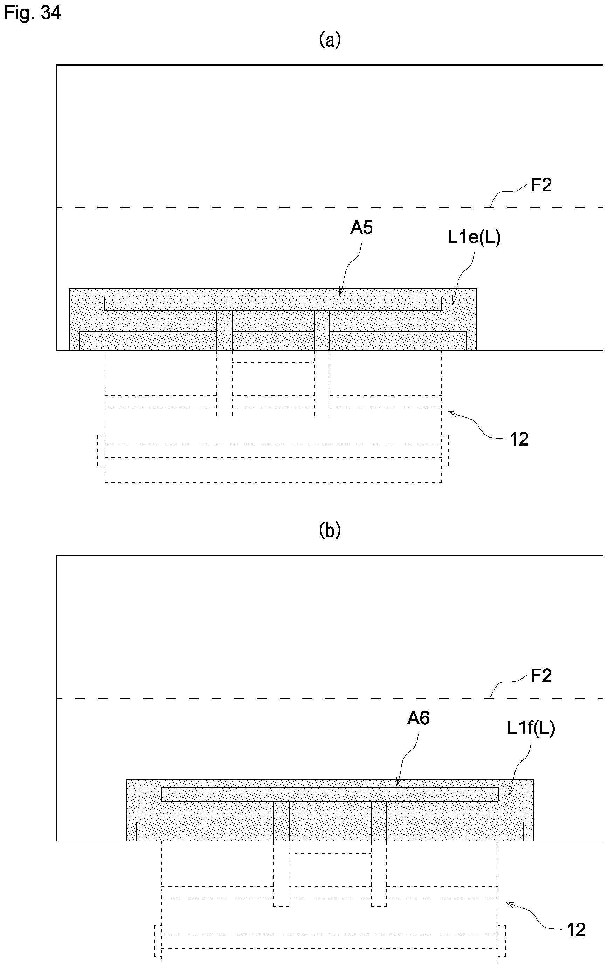

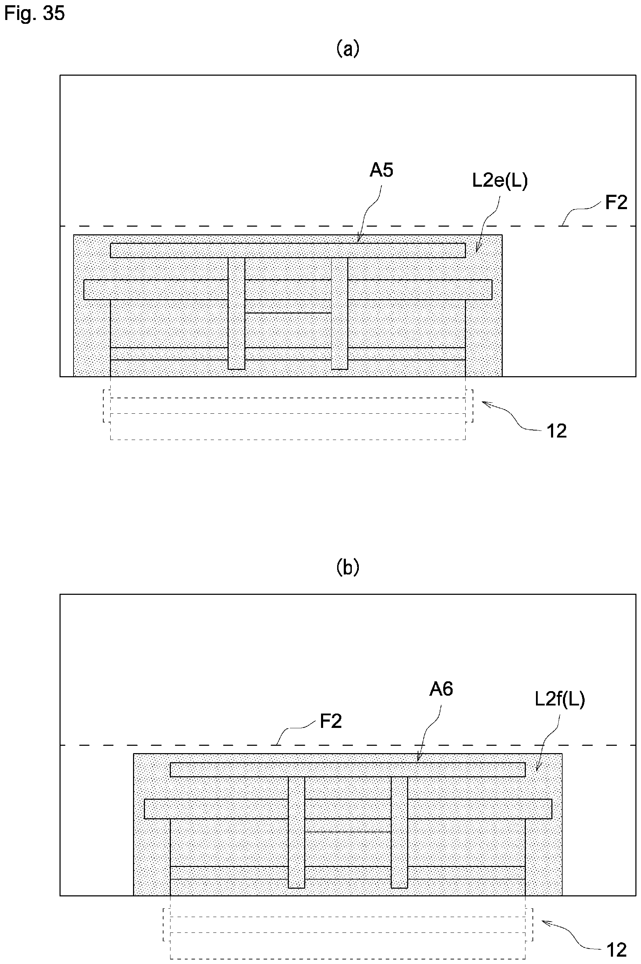

The correction process is described based on FIG. 34 and FIG. 35.

FIG. 34 and FIG. 35 illustrate a state where the display device presents a three-dimensional image generated from the measurement result of the rear lidar sensor 102. FIG. 34 illustrates the state in the lowering position with regard to the work device 12 and the masking range L. FIG.

35 illustrates the state in the lifting position with regard to the work device 12 and the masking range L. In FIG. 34 and FIG. 35, the part of the work device 12 present within the measurement range D of the rear lidar sensor 102 is illustrated in a solid line, and the part present outside the measurement range D of the rear lidar sensor 102 is illustrated in a dotted line. Therefore, the position where the work device 12 is present in FIG. 34 corresponds to the lower limit position of the work device 12 in the lifting/lowering range, and the position where the work device 12 is present in FIG. 35 corresponds to the upper limit position of the work device 12 in the lifting/lowering range.

As illustrated in FIG. 34(a) and FIG. 35(a), the masking range setting unit 111 acquires the lower limit position (the lowering position) and the upper limit position (the lifting position) of the work device 12 in the lifting/lowering range as a range A5 of movement of the work device 12 specified from the type/range-of-movement information. Therefore, the masking range setting unit 111 sets a masking range L1e for the lowering position and a masking range L2e for the lifting position in accordance with the range A5 of movement of the work device 12. In FIG. 34(a) and FIG. 35(a), the range A5 of movement of the work device 12, the masking range L1e for the lowering position, and the masking range L2e for the lifting position are illustrated on the three-dimensional image generated from the measurement result of the rear lidar sensor 102.

Here, the correction process is performed so that the work device 12 is actually moved, and the range-of-movement acquisition unit 110 acquires an actual range A6 of movement of the work device 12 based on the measurement information of the rear lidar sensor 102 as illustrated in FIG. 34(b) and FIG. 35(b). Here, as the range A6 of movement, the lower limit position (the lowering position) and the upper limit position (the lifting position) of the work device 12 in the lifting/lowering range are acquired. The masking range setting unit 111 compares the range A5 of movement illustrated in FIG. 34(a) and FIG. 35(a) with the range A6 of movement illustrated in FIG. 34(b) and FIG. 35(b) to determine whether there is a difference between the ranges.

In this case, as the range A5 of movement illustrated in FIG. 34(a) and FIG. 35(a) is shifted to left with respect to the range A6 of movement illustrated in FIG. 34(b) and FIG. 35(b), the masking range setting unit 111 determines that there is a difference between the ranges and corrects the set masking range L1e for the lowering position and the set masking range L2e for the lifting position. The masking range setting unit 111 corrects the set masking range L1e for the lowering position and the set masking range L2e for the lifting position to a corrected masking range L1f for the lowering position and a corrected masking range L2f for the lifting position in accordance with the range A6 of movement illustrated in FIG. 34(b) and FIG. 35(b).

A configuration is such that the user, or the like, flexibly makes a selection as to whether the correction process is to be performed. For example, the user may use the mobile communication terminal 3 to give an instruction for the execution of the correction process. Furthermore, the user, or the like, may determine the timing in which the correction process is performed. For example, the correction process may be performed as the preprocessing to use the rear lidar sensor 102; however, this is not a limitation, and the correction process may be performed after the tractor 1 automatically travels in the automatic travel state in actuality. Accordingly, even when the lowering position or the lifting position of the work device 12 is different from the initial position in some usage situation of the work device 12, the correction process may be performed to correct the masking range L as appropriate in accordance with the actual range of movement of the work device 12.

### [Another Embodiment]

Another embodiment of the present invention is described.

Furthermore, the configuration in each embodiment described below is not always applied independently and may be applied in combination with the configuration in another embodiment.
(1) The configuration of the work vehicle may be modified in various ways.
   For example, the work vehicle may be configured to include the engine 9 and an electric motor for traveling so as to be designed for hybrid or may be configured to include an electric motor for travelling instead of the engine 9 so as to be designed for electrification.
   For example, the work vehicle may be configured to include right and left crawlers as traveling parts instead of the right and left rear wheels 6 so as to be designed as a semi crawler.
   For example, the work vehicle may be designed for rear-wheel steering in which the right and left rear wheels 6 function as steered wheels.
(2) Although the front lidar sensor 101 and the rear lidar sensor 102 are disposed at the positions corresponding to the roof 35 with respect to the vertical direction according to the above embodiment, the disposition may be changed as appropriate. For example, the front lidar sensor 101 may be disposed on the front side end of the hood 8, and the rear lidar sensor 102 may be disposed at the position corresponding to the roof 35.
(3) Although the two lidar sensors, the front lidar sensor 101 and the rear lidar sensor 102, are provided in the example described according to the above embodiment, the number of lidar sensors may be changed as appropriate and may be one or three or more.
(4) In the above-described embodiment, the measurement ranges of the front lidar sensor 101 and the rear lidar sensor 102 to be set may be changed as appropriate.
(5) Although the obstacle control unit 107 performs the obstacle detection process based on the measurement information of the lidar sensors 101, 102 according to the above embodiment, the lidar sensors 101, 102 may include a control unit so that the control unit performs the obstacle detection process. Thus, modifications may be made as appropriate as to whether the obstacle detection process is performed on the sensor side or the work vehicle side.
(6) Although the tractor 1 includes the obstacle control unit 107, the range-of-movement acquisition unit 110, and the masking range setting unit 111 in the example described according to the above embodiment, for example, a device other than the tractor 1, such as the mobile communication terminal 3, may include them.
(7) Although the tractor 1 includes the obstacle detection unit 113, the collision avoidance control unit 114, the calibration processing unit 115, and the masking range setting unit 116 in the example described according to the above embodiment, a device other than the tractor 1, such as the mobile communication terminal 3, may include them.
(8) Although the lidar sensors 101, 102 are illustrated as position information measurement sensors according to the above embodiment, the position information measurement sensors may be for example the front camera 108 and the rear camera 109, and various position information measurement sensors other than cameras may be applied.
(9) Although the tractor 1 includes the obstacle control unit 107, the range-of-movement acquisition unit 110, and the masking range setting unit 111 in the example described according to the above embodiment, a device other than the tractor 1, such as the mobile communication terminal 3, may include them.

### INDUSTRIAL APPLICABILITY

The present invention is appliable to various obstacle detection systems used in work vehicles and to various work vehicles including a position information measurement sensor that measures the position information about a measurement target around the work vehicle.

### DESCRIPTION OF REFERENCE NUMERALS

1 tractor (work vehicle, work vehicle main body)
5 front wheel (movable part)
12 work device (movable part)
101 front lidar sensor (distance sensor, position information measurement sensor)
102 rear lidar sensor (distance sensor, position information measurement sensor)
102a sensor storage unit (storage unit)
110 range-of-movement acquisition unit
107 obstacle control unit
111 masking range setting unit
112 external output unit
115 calibration processing unit
116 masking range setting unit
185 vehicle-mounted storage unit (storage unit)
401 rear calibration jig (calibration jig)

## Claims

1. An obstacle detection system comprising:
a distance sensor that is included in a work vehicle and is capable of measuring a distance to a measurement target;
an obstacle control unit that executes collision avoidance control when detecting a measurement target within a predetermined distance as an obstacle based on a measurement result of the distance sensor;
a masking range setting unit that sets a masking range in which obstacle detection is not executed and execution of the collision avoidance control by the obstacle control unit is restricted; and
a range-of-movement acquisition unit that acquires a range of movement of a movable part that is movably provided in the work vehicle, wherein
the masking range setting unit sets the masking range in accordance with the range of movement acquired by the range-of-movement acquisition unit.

2. The obstacle detection system according to claim 1, wherein a work device movably coupled to the work vehicle is provided as the movable part, and the range-of-movement acquisition unit acquires the range of movement when the work device is actually moved.

3. The obstacle detection system according to claim 2, wherein the masking range setting unit variably sets the masking range in accordance with a moving state of the work device.

4. The obstacle detection system according to claim 2 or 3, comprising a storage unit that stores type/range-of-movement information associating a type of the work device with the range of movement acquired by the range-of-movement acquisition unit, wherein
the masking range setting unit sets the masking range in accordance with the type of the work device actually coupled to the work vehicle and the type/range-of-movement information stored in the storage unit.

5. The obstacle detection system according to claim 4, comprising an external output unit capable of outputting the type/range-of-movement information stored in the storage unit to an external unit through communication with the external unit.

6. A work vehicle comprising:
a position information measurement sensor that measures position information about a measurement target around a work vehicle main body;
a calibration processing unit that performs a calibration process to calibrate an installation state of the position information measurement sensor in the work vehicle main body to a desired state; and
a masking range setting unit that sets a masking range within a measurement range of the position information measurement sensor, the masking range being a range excluded from measurement of the position information, wherein
the position information measurement sensor is disposed in a state, where part of the work vehicle main body or of a member equipped to the work vehicle main body is included in the measurement range,
the calibration processing unit uses the part of the work vehicle main body or of the member equipped to the work vehicle main body, which is included in the measurement range of the position information measurement sensor, to perform the calibration process based on measurement information of the position information measurement sensor, and
the masking range setting unit uses the part of the work vehicle main body or of the member equipped to the work vehicle main body, which is included in the measurement range of the position information measurement sensor, to set the masking range based on the measurement information of the position information measurement sensor after the installation state of the position information measurement sensor is calibrated to the desired state.

7. The work vehicle according to claim 6, wherein
the position information measurement sensor includes a plurality of position information measurement sensors including a first position information measurement sensor that is disposed in a state, where the part of the work vehicle main body or of the member equipped to the work vehicle main body is included in a measurement range, and a second position information measurement sensor that is disposed in a state, where the part of the work vehicle main body or of the member equipped to the work vehicle main body is not included in a measurement range,
the work vehicle comprises a calibration jig that is disposed in a state, where the calibration jig is included in the measurement range of the second position information measurement sensor, and
the calibration processing unit uses the calibration jig included in the measurement range of the second position information measurement sensor to perform the calibration process based on measurement information of the second position information measurement sensor.

8. The work vehicle according to claim 6 or 7, wherein the calibration jig is attachable to and detachable from the work vehicle main body.

9. The work vehicle according to any one of claims 6 to 8, wherein
the position information measurement sensor includes a distance sensor that measures a distance to a measurement target in three dimensions as position information,
the work vehicle comprises an obstacle detection unit that detects a measurement target within a predetermined distance as an obstacle based on measurement information of the distance sensor, and
the masking range setting unit sets, as the masking range, a range in which the obstacle detection unit refrains from executing obstacle detection.

10. An obstacle detection system comprising:
a distance sensor that is included in a work vehicle and is capable of measuring a distance to a measurement target;
an obstacle control unit that executes collision avoidance control when detecting a measurement target within a predetermined distance as an obstacle based on a measurement result of the distance sensor;
a masking range setting unit that sets a masking range in which obstacle detection is not executed and execution of the collision avoidance control by the obstacle control unit is restricted; and
a storage unit that stores, with regard to a work device flexibly coupled to the work vehicle, type/range-of-movement information associating a type of the work device with a range of movement of the work device, wherein
the masking range setting unit sets the masking range in accordance with the type of the work device actually coupled to the work vehicle and the type/range-of-movement information stored in the storage unit.

11. The obstacle detection system according to claim 10, wherein the masking range setting unit variably sets the masking range in accordance with a moving state of the work device.

12. The obstacle detection system according to claim 10 or 11, wherein the masking range setting unit is capable of correcting the masking range in accordance with the range of movement when the work device coupled to the work vehicle is actually moved.
